# EUROPEAN PATENT APPLICATION

(11) **EP 1 845 483 A1**
(43) Date of publication of application: **17.10.2007**
(21) Application number: 07007603.9
(22) Date of filing: 13.04.2007
(51) Int. Cl.: G06K 19/077, G09F 3/02, G06K 19/04

(54) **RFID label**

(30) Priority: 13.04.2006 JP 2006111248
(71) Applicant: Brother Kogyo Kabushiki Kaisha, Nagoya-shi, Aichi-ken 467-8561 (JP)
(72) Inventor: Nagae, Tsuyoshi, Nagoya-shi Aichi 467-8561 (JP)
(74) Representative: Hofer, Dorothea

(57) **Abstract**

A tamper-evident RFID label (T) includes a separation material layer (101g;101d'), a substantially sheet-state antenna base, a tag antenna (152), and a trace forming adhesive layer (101f;101c') which forms a predetermined separation trace when the label is separated from an adhesion target to which it was previously affixed.

## Description

### TECHNICAL FIELD

The present invention relates to an RFID label including an RFID circuit element capable of transmitting and receiving information to and from the outside through wireless communication.

### BACKGROUND ART

There are known RFID (Radio Frequency Identification) systems for reading/writing information between a compact RFID tag and a reader (reading device)/writer (writing device) contactlessly. The RFID tag includes: an IC circuit part storing predetermined RFID tag information; and an antenna being connected to the IC circuit part and transmitting and receiving information. Even when the RFID tag is soiled or disposed at an invisible position, the reader/writer side can access the RFID tag information of the IC circuit part (can read/write information), and thus it has begun to be put to practical use in various fields such as commodity management, inspection process, and the like.

The RFID tag is formed into, for example, a label shape and is affixed to a target commodity of affixation by an adhesive applied to, for example, the back surface of the label. Relating to this, a technique has already been proposed in which if an attempt is made to separate an RFID label after affixed once to an adhesion target, a portion of the RFID circuit element breaks in a self-destructive manner from the standpoint of security of information stored in the IC circuit part (for example, refer to JP, A, 2000-48147).

### DISCLOSURE OF THE INVENTION

### Problem to be Solved by the Invention

The above-mentioned prior art aims to ensure the security of information in the IC circuit part and the RFID circuit element is designed to break without fail at the time of separation of an RFID label once affixed, however, it is difficult to visually recognize whether the RFID circuit element has broken (that is, whether it has been separated by a third person after affixation) and in fact it is known only after communication is established.

An object of the present invention is to provide an RFID label with which it is possible for a user to visually plainly recognize that the RFID label is separated after once affixed to an adhesion target.

### Means for Solving the Problem

In order to achieve the above object, a first invention is an RFID label comprising a separation material layer provided at the end on one side of the label in the thickness direction and detached from a portion other than that at affixing, a substantially sheet-state antenna base arranged on the other side from the separation material layer in the thickness direction of the label and on which an RFID circuit element having an IC circuit part that stores information and a tag antenna that transmits/receives information is arranged, and a trace forming adhesive layer at least a portion of that is provided adjacent to the other side of the separation material layer in the thickness direction of the label and that forms a predetermined separation trace by being detached after affixed to an adhesion target.

The RFID label of the first invention of the present application includes the RFID circuit element on the antenna base and is affixed to an adhesion target (object of affixation) after the separation material layer is separated when used. At this time, at least a portion of the trace forming adhesive layer is provided adjacent to the separation material layer as an adhesive and when the separation material layer is separated at the time of affixation, it is exposed and the entire label is affixed to an adhesion target by the exposed trace forming adhesive layer. Then, if an attempt to separate the label is made after it was once affixed to the adhesion target, a predetermined separation trace is formed by the trace forming adhesive layer.

With the arrangement, when a third person intentionally separates a label from an adhesion target after affixed once to the adhesion target by a user (even if the label is affixed again), this will become visually plain. As a result, it is made actually impossible to separate the label once affixed, or when the label is affixed again after separated, it is possible to take such a measure to discard the RFID label immediately and affix a new RFID label again, and therefore, a high security can be ensured without fail.

According to second invention, in the RFID label according to the first invention, the trace forming adhesive layer including a fixation area that remains fixed to the adhesion target at detaching and a departure area that departs from the adhesion target at detaching is configured to form the predetermined separation trace by the arrangement of the fixation area and the departure area.

In the trace forming adhesive layer, the fixation area remains fixed to the adhesion target (that is, the area departs from the label side) at the time of separation and on the other hand, the departure area departs from the adhesion target (that is, the area remains on the label side). In this manner, by the arrangement of the two areas with different behaviors, that is, remaining behavior and departing behavior, a predetermined separation trace can be formed in the trace forming adhesive layer and with the arrangement, it is possible to make it visually plain that the label was once separated.

According to third invention, in the RFID label according to the first invention, the RFID label further comprises a print-receiving tape layer provided at the end on the other side of the label in the thickness direction and on which a predetermined printing is applied.

In the structure including the print-receiving tape layer at the end portion on the other side in the direction of thickness, the aspect of outside appearance becomes different from a state of only the original print when viewed from the label surface because of the presence of the separation trace, and therefore, it is possible without fail to make it visually plain that the label was once separated. In particular, when the printed portion and the separation trace overlap each other when viewed from the side of label surface, the print becomes more unreadable and therefore the effect that the visual effect is further enhanced is obtained.

According to fourth invention, in the RFID label according to the third invention, the RFID label further comprises an intermediate base layer disposed at an intermediate portion between the print-receiving tape layer and the antenna base in the label thickness direction characterized in that, the trace forming adhesive layer is provided on one side from the antenna base in the label thickness direction.

By providing the intermediate base layer between the print-receiving tape layer and the antenna base layer, it is made possible for the RFID circuit element of the antenna base to be not seen when viewed from the side of label surface and the quality of design (fine view) of the outside appearance of the label can be improved.

According to fifth invention, in the RFID label according to the fourth invention, the intermediate base layer with a substantially opaque color is configured to have a smaller width than the trace forming adhesive layer.

By causing the intermediate base layer to have a substantially opaque color, it is made possible without fail for the RFID circuit element to be not seen from the side of label surface. In addition, at this time, by making the dimension in the direction of width of the intermediate layer smaller than the trace forming adhesive layer provided on the side of the separation material layer, it is possible without fail to visually recognize the portion (protruding portion) greater than the intermediate base layer in the dimension in the direction of width from the side of label surface when a separation trace is produced in the trace forming adhesive layer.

According to sixth invention, in the RFID label according to the third invention, the trace forming adhesive layer is provided on one side from the antenna base in the label thickness direction, and the print-receiving tape layer has a substantially transparent color.

With the arrangement, it is possible to realize a structure in which the print-receiving tape layer, the antenna base, the trace forming adhesive layer, and the separation material layer are laminated in this order when viewed from the side of label surface and the label is affixed to the adhesion target using the entire area of the trace forming adhesive layer. In addition, in this structure, by causing the print-receiving tape layer to have a substantially transparent color, it is possible to visually plainly recognize from the side of label surface over the print-receiving tape layer when a separation trace is produced in the trace forming adhesive layer.

According to seventh invention, in the RFID label according to the first invention, the RFID label further comprises a print-receiving tape layer with a substantially transparent color provided at the end on the other side of the label in the thickness direction and on which a predetermined printing is applied, the trace forming adhesive layer is provided on the other side from the antenna base in the label thickness direction.

The RFID label of the seventh invention of the present application includes the RFID circuit element on the antenna base and is affixed to an adhesion target (object of affixation) after the separation material layer is separated when used. Since the trace forming adhesive layer is provided as an adhesive, if an attempt to separate the RFID label again is made after it was once affixed to the adhesion target as described above, a predetermined separation trace is formed.

At this time, in the seventh invention of the present application, the trace forming adhesive layer is provided on the other side in the direction of label thickness of the antenna base and further, the print-receiving tape layer is provided at the end portion on the other side in the direction of thickness and the print-receiving tape layer, the trace forming adhesive layer, the antenna base, and the separation material layer are laminated in this order when viewed from the side of label surface. With the arrangement, if there exists such a separation trace as described above, the color of the print-receiving tape layer is substantially transparent and therefore it is possible to visually plainly recognize that the aspect of the outside appearance is different from the state of only the original print from the side of label surface over the print-receiving tape layer. Consequently, when a third person intentionally separated the label from the adhesion target after a user affixed the label once to the adhesion target (even if the label was affixed again), this will become visually plain. In particular, since the trace forming adhesive layer is situated near the side of label surface, the visual recognizability of the separation trace is improved all the more.

As a result, it is made actually impossible to separate the label once affixed, or when the label is affixed again after separated, it is possible to take such a measure to discard the RFID label immediately and affix a new RFID label again, and therefore, a high security can be ensured without fail. In particular, when the printed portion and the separation trace overlap each other when viewed from the side of label surface, the print becomes more unreadable and therefore the effect that the visual effect is further enhanced is obtained.

In addition, since it is possible to realize the structure in which the label is affixed to the adhesion target using the area other than the portion of the antenna base of the trace forming adhesive layer, it is made possible to make small the dimension in the direction of thickness of the entire label by omitting the adhesive layer on the side of separation material layer from the antenna base.

According to eighth invention, in the RFID label according to the first invention, the RFID label further comprises a base layer for arranging adhesive having a substantially translucent color for providing the trace forming adhesive layer on one side in the label thickness direction.

By providing the base layer configured to arrange an adhesive, it is possible to dispose the trace forming adhesive layer stably in the lamination structure and by making the color substantially transparent, the visual recognizability of the separation trace can be ensured.

According to ninth invention, in the RFID label according to the first invention, the predetermined printing has been printed to the surface on one side of the print-receiving tape layer in the label thickness direction.

In the RFID label including a print area formed by a mirror image print from the side (back side) of antenna base of the print-receiving tape layer, it is possible to improve security by producing a separation trace in the trace forming adhesive layer.

According to tenth invention, in the RFID label according to the first invention, the predetermined printing has been printed to the surface on the other side of the print-receiving tape layer in the label thickness direction.

In the RFID label including a print area formed by a normal image print from the opposite side (surface side) of the antenna base of the print-receiving tape layer, it is possible to improve security by producing a separation trace in the trace forming adhesive layer.

### Advantages of the Invention

According to the present invention, it is possible for a user to visually plainly recognize that a label has been separated after affixed once to an object of affixation.

### BRIEF DESCRIPTION OF THE DRAWING

Fig. 1 is a system configuration diagram showing an RFID tag producing system including a tag label producing apparatus configured to produce an RFID label according to an embodiment of the present invention.
Fig. 2 is a perspective view showing an entire structure of the tag label producing apparatus.
Fig. 3 is a perspective view showing a structure of an internal unit inside the tag label producing apparatus.
Fig. 4 is a plan view showing the structure of the internal unit.
Fig. 5 is an enlarged plan view schematically showing a detailed structure of a cartridge.
Fig. 6 is a conceptual diagram when viewed in the direction of arrow D in Fig. 5, showing a conceptual configuration of an RFID circuit element provided to a base tape fed out from a first roll.
Fig. 7 is a partially extracted perspective view showing a detailed structure of essential parts of a label carry-out mechanism.
Fig. 8 is a perspective view showing an outside appearance of the internal unit in a state in which the label carry-out mechanism has been removed from the structure shown in Fig. 3.
Fig. 9 is a perspective view showing an outside appearance of a cutting mechanism in which a half cutter has been removed from the internal unit.
Fig. 10 is a perspective view showing the outside appearance of the cutting mechanism in which the half cutter has been removed from the internal unit.
Fig. 11 is a perspective view showing a detailed structure of a movable blade and a fixed blade together with a half cut unit.
Fig. 12 is a partially enlarged section view showing a detailed structure of the movable blade and the fixed blade together with the half cut unit.
Fig. 13 is an elevation view showing an outside appearance of the movable blade.
Fig. 14 is a transverse section view by A-A section in Fig. 13.
Fig. 15 is a functional block diagram showing a control system of the tag label producing apparatus.
Fig. 16 is a circuit diagram briefly showing a circuit configuration of a connection portion of a transmitting circuit, a receiving circuit, and a loop antenna.
Fig. 17 is a functional block diagram showing a functional configuration of the RFID circuit element.
Fig. 18 is a top view and bottom view showing an example of an outside appearance of the RFID label formed when information write (or read) of the RFID circuit element and the cut of a tag label tape with print have been completed by the tag label producing apparatus.
Fig. 19 is a diagram of the transverse section view of the configuration shown in Fig. 18 rotated by 90 degrees in the counterclockwise direction.
Fig. 20 is a diagram showing an example of a screen displayed on a PC (terminal or a general-purpose computer) at the time of access (read or write) to RFID tag information of an IC circuit part of the RFID circuit element by the tag label producing apparatus.
Fig. 21 is a top view showing an example of a state in which an RFID label is separated after affixed once to an adhesion target (object of affixation).
Fig. 22 is a top view showing an example of an outside appearance of an RFID label T according to a modification example in which only the periphery of a tag is concealed.
Fig. 23 is a top view showing an example of a state in which an RFID label is separated after affixed once to an adhesion target.
Fig. 24 is a top view showing an example of an outside appearance of an RFID label according to a modification example in which a tag is not concealed.
Fig. 25 is a top view showing an example of a state in which an RFID label is separated after affixed once to an adhesion target.
Fig. 26 is a schematic transverse section view of the structure shown in Fig. 24.
Fig. 27 is a top view showing an example of an outside appearance of the RFID label T according to a modification example in which a tag is separated and then disposed on the lower side than a separation trace forming adhesive layer.
Fig. 28 is a top view showing an example of a state in which an RFID label is separated after affixed once to an adhesion target.
Fig. 29 is a schematic transverse section view of the structure shown in Fig. 27.
Fig. 30 is a plan view showing a detailed structure of a cartridge in a modification example in which bonding is not performed.
Fig. 31 is a schematic transverse section view of an RFID label.
Fig. 32 is a schematic transverse section view of an RFID label according to a modification example in which an image receiving layer is provided on a normal base layer and printing is performed.
Fig. 33 is a schematic transverse section view of an RFID label according to a modification example in which a tag is separated and then disposed on the upper side than a separation trace forming adhesive layer.
Fig. 34 is a schematic transverse section view of an RFID label according to a modification example in which an image receiving layer is provided on a normal base layer and printing is performed.

### BEST MODE FOR CARRYING OUT THE INVENTION

Embodiments of the present invention will be described below with reference to drawings.

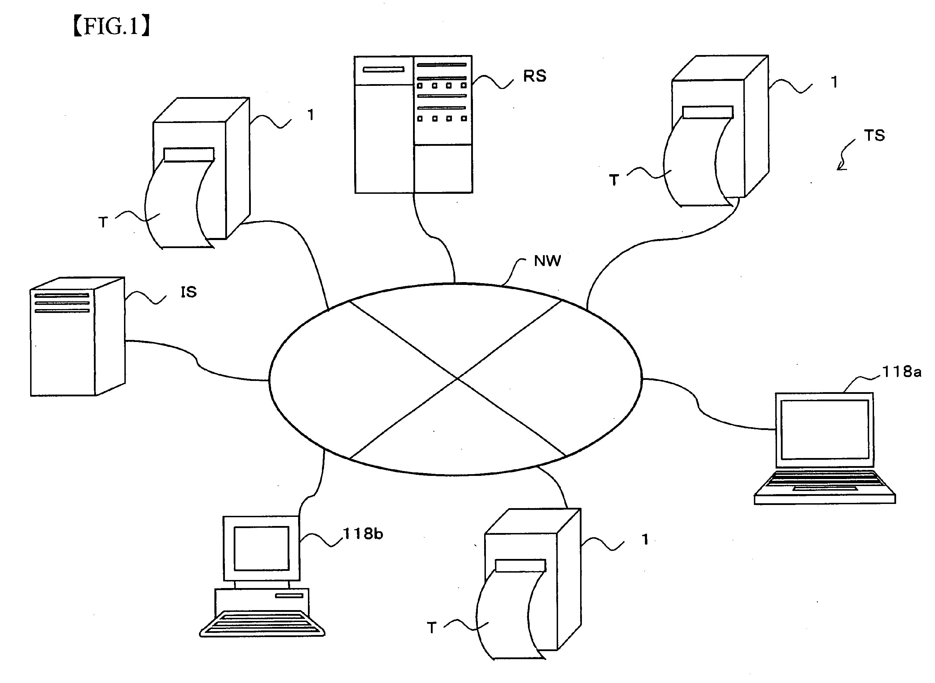

Fig. 1 is a system configuration diagram showing an RFID tag producing system including a tag label producing apparatus for producing an RFID label in the present embodiment.

In an RFID tag producing system TS shown in Fig. 1, a tag label producing apparatus 1 is connected to a route server RS, a plurality of information servers IS, a terminal 118a, and a general-purpose computer 118b via a wired or wireless communication line NW. By the way, the terminal 118a and the general-purpose computer 118b are together given a general name as simply "PC 118" appropriately hereinafter.

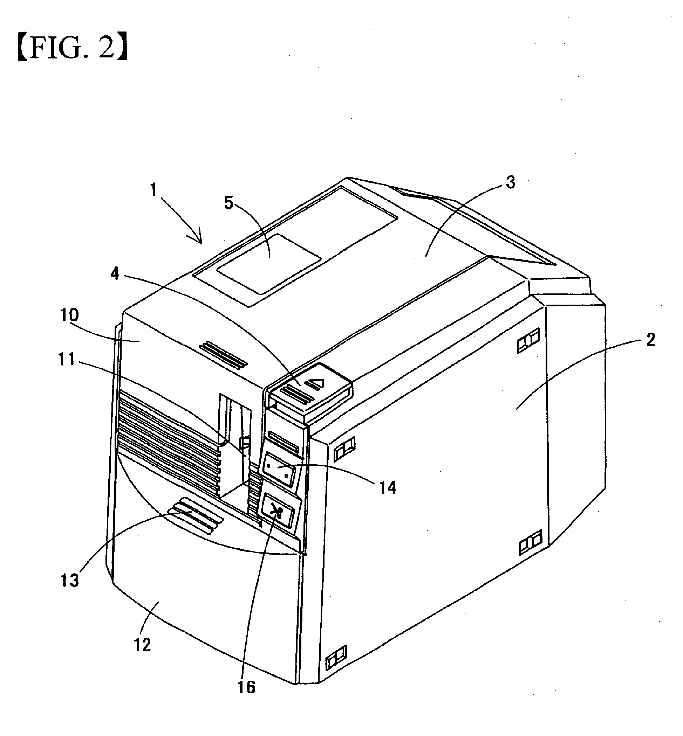

Fig. 2 is a perspective view showing the entire structure of the above-mentioned tag label producing apparatus 1.

In Fig. 2, the tag label producing apparatus 1 is connected to the PC 118 and produces an RFID label with desired print based on the operation from the PC 118, having a main body 2 and an opening/closing lid 3 provided on the top surface of the main body 2 so as to be capable of opening and closing.

The main body 2 includes a sidewall 10 (housing) having a label carry-out exit 11 (carry-out exit) that is situated on the front side (in Fig. 2, on the left-front side) and which carries out an RFID label T (to be described later) produced in the main body 2 to the outside and a side lid 12 that is provided below the label carry-out exit 11 of the sidewall 10 and the lower end of which is supported rotatably.

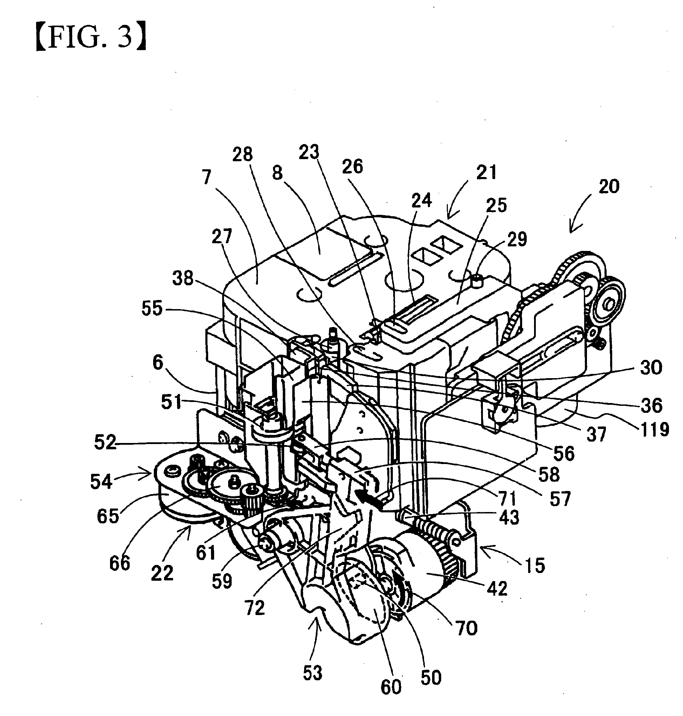

The side lid 12 includes a press part 13 and the side lid 12 is released forward by pressing down the press part 13 from above. In addition, below an opening/closing button 4 of a sidewall 3a, s power supply button 14 that turns on and off the power supply of the tag label producing apparatus 1 is provided. Below the power supply button 14, a cutter drive button 16 to drive a cutting mechanism 15 (refer to Fig. 3, to be described later) arranged in the main body 2 by the manual operation of a user is provided and a tag label tape 109 with print (to be described later) is cut into a desired length by pressing the button 16 and thus the RFID label T is produced.

The opening/closing lid 3 is rotatably supported by an axis at the end portion on the right-back side of the main body 2 in Fig. 2 and always biased in the direction of releasing via a biasing member such as a screw etc. Then, when the opening/closing button 4 disposed on the top surface of the main body 2 so as to be adjacent to the opening/closing lid 3 is pressed, the lock between the opening/closing lid 3 and the main body 2 is released and opened by the action of the above-mentioned biasing member. By the way, on the center-left side of the opening/closing lid 3, a transparent window 5 covered with a transparent cover is provided.

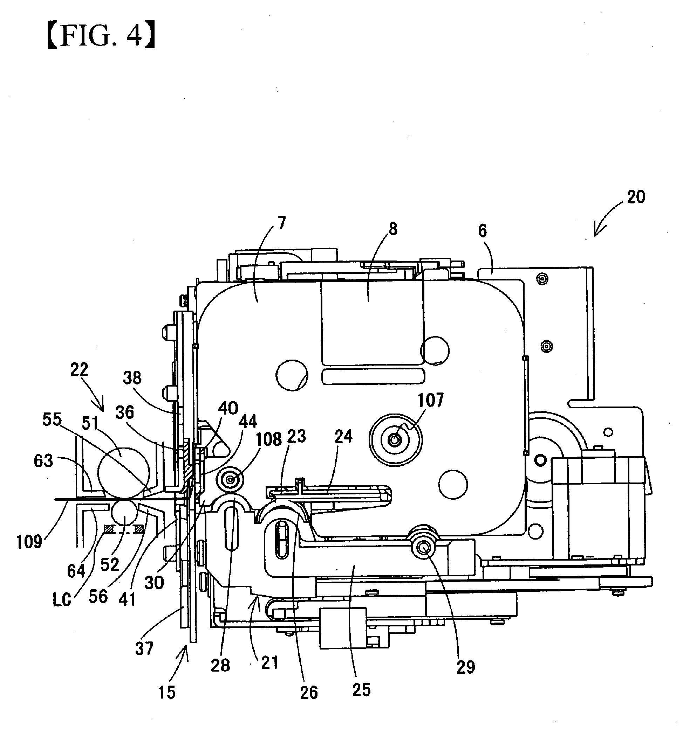

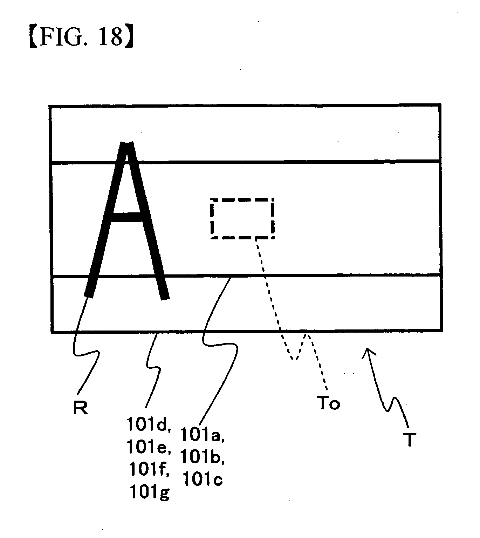

Fig. 3 is a perspective view showing the structure (however, a loop antenna LC, to be described later, is omitted) of an internal unit 20 inside the RFID tag producing system 1. In Fig. 3, the internal unit 20 generally includes a cartridge holder 6 that accommodates a cartridge 7, a printing mechanism 21 that includes a print head (thermal head) 23, the cutting mechanism 15, a half cut unit 35 (refer to Fig. 4, to be described later), and a label carry-out mechanism 22 that carries out the manufactured RFID label T (refer to Fig. 18, to be described later) from the label carry-out exit 11 (refer to Fig. 2).

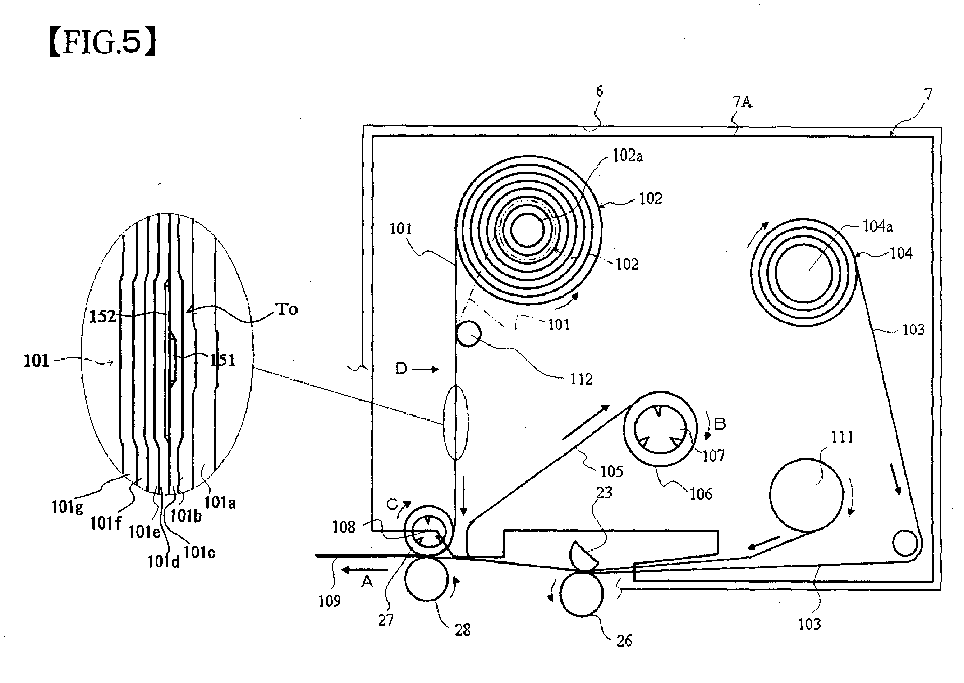

Fig. 4 is a plan view showing the structure of the internal unit 20 shown in Fig. 3, and Fig. 5 is an enlarged plan view showing schematically a detailed structure of the above-mentioned cartridge 7.

In Fig. 4 and Fig. 5, the cartridge holder 6 accommodates the cartridge 7 such that the direction of the tag label tape 109 with print in the direction of width to be carried out from the label carry-out exit 11 is vertical. The cartridge 7 has a housing 7A, a first roll 102 disposed inside the housing 7A and wound by a belt-shaped base tape 101, a second roll 104 wound by the cover film 103 that is transparent and has substantially the same width as that of the base tape 101, a ribbon-supply-side roll 111 that feeds out an ink ribbon 105 (a thermal transfer ribbon, however, not necessary when the print-receiving tape is a heat sensitive tape) , a ribbon take-up roller 106 that takes up the ribbon 105 after print, a feeding roller 27 supported rotatably in the vicinity of a tape carry-out exit 30 of the cartridge 7, and a guide roller 112 that functions as a transport position regulating means.

The feeding roller 27 presses and causes the base tape 101 and the cover film 103 to adhere to each other to form the tag label tape 109 with print and at the same time, performs feeding of tape in the direction shown by arrow A (that is, it also functions as a pressure roller).

The first roll 102 winds the base tape 101, on which a plurality of substantially sheet-state antenna bases including the RFID circuit element To (abbreviated simply to "tag To" in each figure) are disposed sequentially at predetermined identical intervals in the lengthwise direction, around a reel member 102a.

In this example, the base tape 101 (excluding the portion of the antennal base including the RFID circuit element To) has a seven-layer structure (refer to a partially enlarged view in Fig. 5) and is arranged by laminating an adhesive layer 101a composed of an appropriate color adhesive material with transparency (translucency), a colored (for example, a color, such as white, with concealing nature) base layer (base film) 101b composed of PET (polyethylene terephthalate) and the like, an adhesive layer 101c composed of a transparent adhesive material similar to the above, and the antenna base being clamped in between, an adhesive layer 101d composed of a transparent adhesive material similar to the above, a color base layer 101e with transparency (translucency) composed of an appropriate material, an adhesive layer 101f (details will be described later) for forming a separation trace, which is the essential part of the present embodiment, and a separation sheet 101d in this order from the side thereof wound inwardly (the right side in Fig. 5) toward the opposite side (the left side in Fig. 5).

On the back side (on the left side in Fig. 5) of the base layer 101b, the antenna base including a loop antenna 152 formed into a loop coil shape to perform transmission and reception of information and the RFID circuit element To composed of an IC circuit part 151 connected thereto is provided via the adhesive layer 101c.

On the front side (on the right side in Fig. 5) of the base layer 101b, the adhesive layer 101a to bond the cover film 103 later is formed, and to the back side (the left side in Fig. 5) of the base layer 101b, the base layer 101f is bonded by the adhesive layer 101c and the adhesive layer 101e provided so as to include the RFID circuit element To, and further, the separation sheet 101d is bonded to the base layer 101b by the separation trace forming adhesive layer 101f.

By the way, the separation sheet 101d is designed such that when the RFID label T finally completed into a label shape is affixed to a predetermined commodity etc., it can be bonded to the commodity etc. by the separation trace forming adhesive layer 101f by separating the separation sheet 101d. Then, at this time, the separation trace forming adhesive layer 101f includes a function of forming a separation trace when the RFID label T once affixed to an adhesion target (object of affixation) has been separated.

The second roll 104 winds the cover film 103 around a reel member 104a. The ribbon 105 driven by the ribbon-supply-side roll 111 and the ribbon take-up roller 106, which are disposed on the back surface side of the cover film 103 fed out by the second roll 104 (that is, on a side where it is bonded to the base tape 101) is abutted against the back surface of the cover film 103 by being pressed against the print head 23.

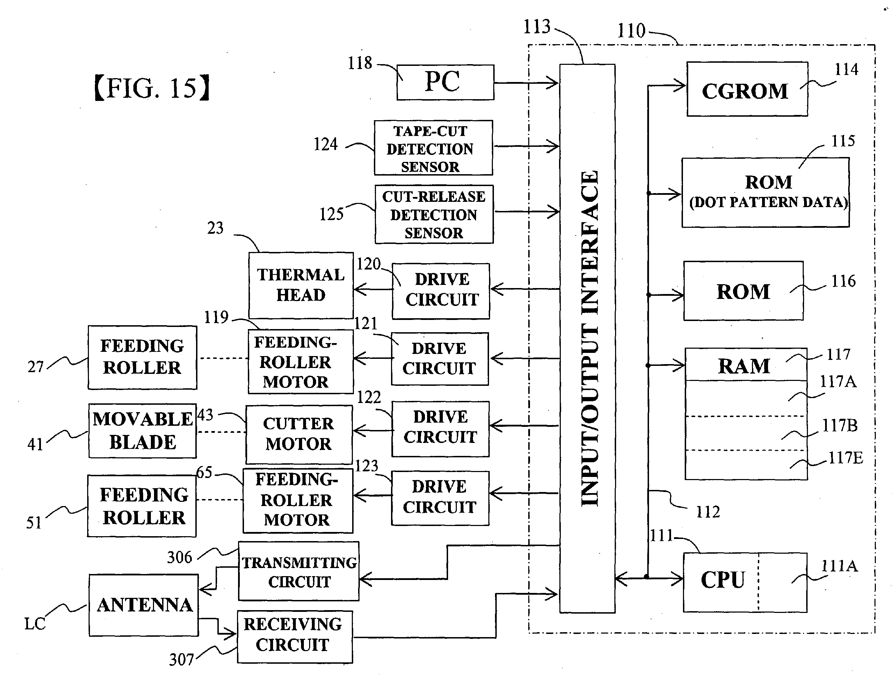

The ribbon take-up roller 106 and the feeding roller 27 are driven in rotation by transmitting the drive force of a feeding-roller motor 119 (refer to Fig. 3 and Fig. 15 to be described later), which is, for example, a pulse motor disposed to the outside of the cartridge 7, to the ribbon take-up roller drive shaft 107 and the feeding roller driving shaft 108 via a gear mechanism, not shown.

On the other hand, the print head 23 including a number of heating elements is mounted to a head mount part 24 erected on the cartridge holder 6 and disposed on the upstream side in the transport direction of the cover film 103 from the feeding roller 27.

In addition, in front of the cartridge 7 (on the lower side in Fig. 4) of the cartridge holder 6, a roller holder 25 is supported rotatably by a support shaft 29 and can be switched between the print position (abutment position, refer to Fig. 4) and the release position (departure position) by a switching mechanism. A platen roller 26 and a pressure roller 28 are arranged rotatably to the roller holder 25 and when the roller holder 25 is switched to the print position, the platen roller 26 and the pressure roller 28 are pressed against the print head 23 and the feeding roller 27.

In the arrangement described above, the base tape 101 fed out from the first roll 102 is supplied to the feeding roller 27. On the other hand, the ink ribbon 105, which is disposed to the back surface side of the cover film 103 fed out from the second roll 104 (that is, the side thereof to be bonded to the base tape 101) and driven by the ribbon-supply-side roll 111 and the ribbon take-up roller 106, is pressed against the print head 23, thereby the ink ribbon 105 is abutted against the back surface of the cover film 103.

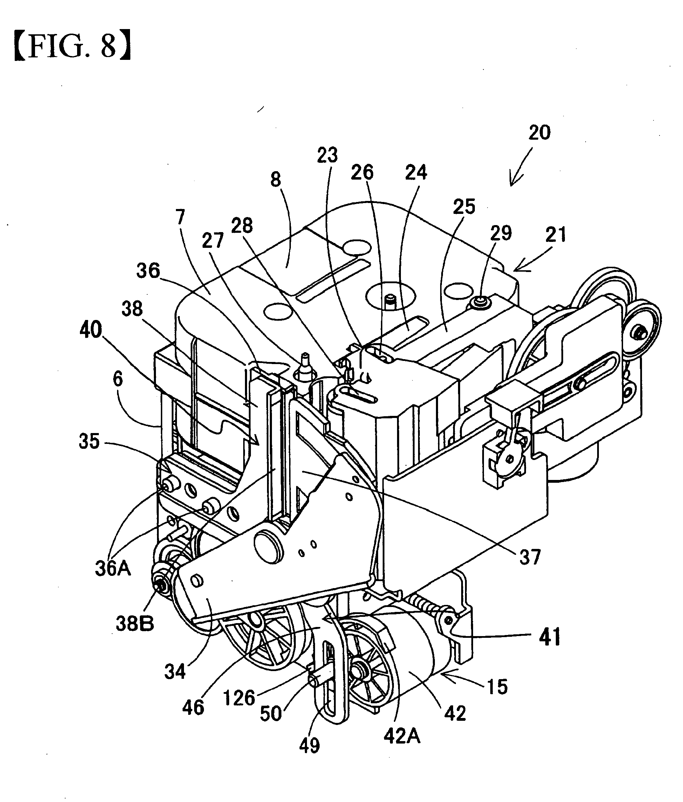

Then, when the cartridge 7 is mounted in the cartridge holder 6 and the roll holder 25 is moved from the release position to the print position, the cover film 103 and the ink ribbon 105 are clamped between the print head 23 and the platen roller 26 and at the same time, the base tape 101 and the cover film 103 are clamped between the feeding roller 27 and the pressure roller 28. Then, the ribbon take-up roller 106 and the feeding roller 27 are driven in rotation in synchronization therewith, respectively by the drive force of the feeding-roller motor 119 in the directions shown by arrows B and C. At this time, the feeding roller driving shaft 108, the pressure roller 28, and the platen roller 26 described above are coupled with each other by a gear mechanism (not shown), and the feeding roller 27, the pressure roller 28, and the platen roller 26 are rotated by driving the feeding roller driving shaft 108, thereby the base tape 101 is fed out from the first roll 102 and supplied to the feeding roller 27 as described above. On the other hand, the cover film 103 is fed out from the second roll 104 and a plurality of heating elements of the print head 23 are energized by a print-head drive circuit 120 (refer to Fig. 15 to be described later). As a result, a print R (refer to Fig. 8 to be described later) , which corresponds to the RFID circuit element To on the base tape 101 as a target of bonding, is printed to the back surface of the cover film 103. Then, the base tape 101 is bonded to and integrated with the cover film 103 having been subjected to the print by the feeding roller 27 and the pressure roller 28, and formed as the tag label tape 109 with print and is transported to the outside of the cartridge 7 from the tape carry-out part 30. The ink ribbon 105, which has finished print to the cover film 103, is taken up to the ribbon take-up roller 106 by driving the ribbon take-up roller drive shaft 107.

By the way, on the top surface of the housing 7A of the cartridge 7, for example, a tape identifying display part 8 for displaying the width, color, etc., of the base tape 101 incorporated within the cartridge 7 is provided. When the cartridge 7 is installed in the cartridge holder 6 and the opening/closing lid 3 is closed, the transparent window 5 described above and the tape identifying display part 8 come to oppose each other and the tape identifying display part 8 can be recognized visually from the outside of the main body 2 via the transparent cover of the transparent window 5. With the arrangement, it is made possible to easily recognize visually the kind etc. of the cartridge 7 installed in the cartridge holder 6 from the outside of the main body 2 via the transparent window 5.

On the other hand, as described above, the internal unit 20 includes the cutting mechanism 15 and the label carry-out mechanism 22, and further includes the loop antenna LC for reading or writing information from or to the RFID circuit element To provided to the base tape 101 (the tag label tape with print after bonding, this applies hereinafter) through wireless communication. Then, after information is read or written from or to the RFID circuit element To by the loop antenna LC for the tag label tape with print produced by bonding as described above, the tag label tape 109 with print is cut automatically or by the cutting mechanism 15 by operating the cutter drive button 16 (refer to Fig. 2) and thus the RFID label T is produced. Then, the RFID label T is carried out from the label carry-out exit 11 formed in the sidewall 3a (refer to Fig. 2) by the label carry-out mechanism 22.

The cutting mechanism 15 includes a fixed blade 40, a movable blade 41 made of a metal member and which performs cutting operation together with the fixed blade 40, a cutter helical gear 42 (refer to Fig. 3) linked to the movable blade 41, and a cutter motor 43 (refer to Fig. 3) linked to the cutter helical gear 42 by a gear row.

The label carry-out mechanism 22 is arranged in the vicinity of the label carry-out exit 11 provided in the sidewall 3a of the main body 2 and has a function as a carrying-out means for forcedly carrying out the tag label tape 109 with print (in other words, the RFID label T, this applies hereinafter) after cut in the cutting mechanism 15 and also has a function as a position regulating means for regulating the transport position of the tag label tape 109 with print at the position (in detail, the read or write position of information by the loop antenna LC) in the vicinity of the label carry-out exit 11. In other words, the label carry-out mechanism 22 includes a feeding roller 51, a pressure roller 52 facing the feeding roller 51 with the tag label tape 109 with print being sandwiched in between, a pressure operation mechanism part 53 (refer to Fig. 3) configured to operate to press the pressure roller 52 against the tag label tape 109 with print or to release the pressure, and a carry-out drive mechanismpart 54 (refer to Fig. 3) that rotates and carries out the tag label tape 109 with print by the feeding roller 51 in conjunction with the pressure release operation of the pressure operation mechanism part 53.

At this time, there are provided inside the label carry-out exit 11, first guide walls 55 and 56 and second guide walls 63 and 64 for guiding the tag label tape 109 with print to the label carry-out exit 11 (refer to Fig. 4). The first guide walls 55 and 56, and the second guide walls 63 and 64 are formed into single units, respectively, and are disposed so as to be mutually separated at a predetermined interval at the carry-out position of the tag label tape 109 with print cut by the fixed blade 40 and the movable blade 41.

The pressure operation mechanism part 53 is composed of a roller support holder 57 (arm member), a roller support part 58 (arm member) mounted on the roller support holder 57 and holding the pressure roller 52 at the front portion, a holder support part 59 that supports the roller support holder 57 rotatably, a cam 60 that drives the pressure operation mechanism part 53 in conjunction with the cutting mechanism 15, and a bias spring 61, as shown in Fig. 3 described above.

The roller support part 58 supports the pressure roller 52 rotatably so as to sandwich the pressure roller 52 in the vertical direction. Then, the roller support holder 57 is rotated counterclockwise (in Fig. 3, in the direction of arrow 71), by the rotation of the cutter helical gear 42, about the holder support shaft 59 as being the center of the rotation through the cam 60, thereby the pressure roller 52 is pressed against the tag label tape 109 with print. In addition, when the cutter helical gear 42 is rotated again, the holder support shaft 59 is rotated in the reverse direction by the bias spring 61 and the pressure roller 52 is separated from the tag label tape 109 with print.

The carry-out drive mechanism part 54 is composed of a feeding-roller motor 65 and a gear row 66 and after the tag label tape 109 with print is pressed against the feeding roller 51 by the pressure roller 52, by driving the feeding-roller motor 65 to rotate the feeding roller 51 in a carry-out direction of the tag label tape 109 with print, the tag label tape 109 with print is carried out forcedly in the carry-out direction.

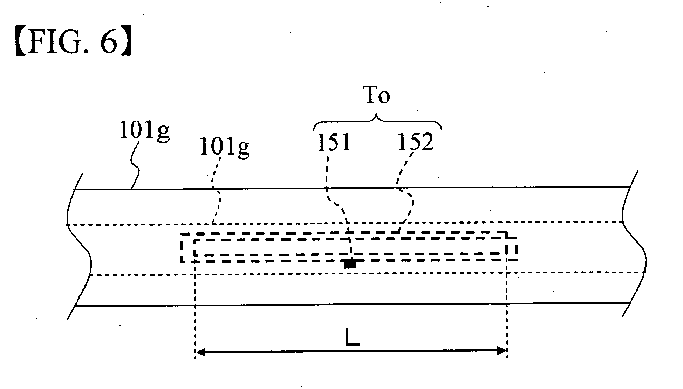

Fig. 6 is a conceptual view showing a conceptual arrangement of the RFID circuit element To provided on the base tape 101 fed out from the first roll 102, viewed in the direction of the arrow D in Fig. 5. In Fig. 6, the RFID circuit element To is composed of the loop antenna 152 formed into a loop coil shape having a length L in the lengthwise direction and configured to transmit/receive information and the IC circuit part 151 connected thereto and configured to store information.

In addition, in this example, the dimension in the width direction (in the vertical direction in Fig. 6) of the transparent adhesive layer 101c (together with the base layer 101b and the adhesive layer 101a) is smaller than the dimension in the width direction of the separation material layer 101g (equal to the dimension in the width direction of the adhesive layer 101d, the base layer 101e, and the separation trace forming adhesive layer 101f) in the lamination structure of the base tape 101 described above.

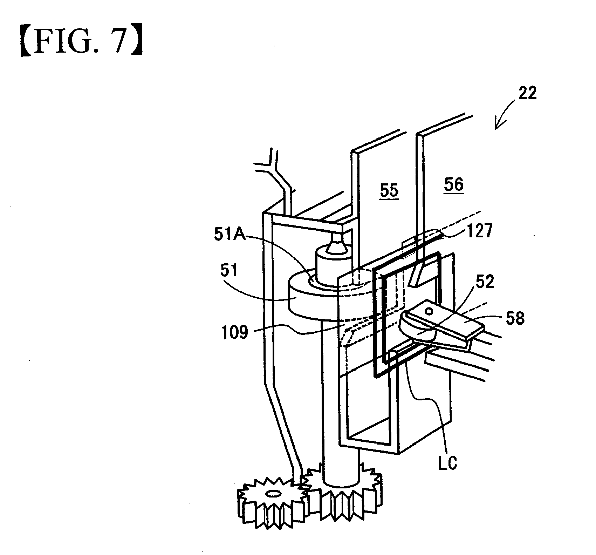

Fig. 7 is a partially extracted perspective view showing a detailed structure of essential parts of the label carry-out mechanism 22. In Fig. 7, the above-mentioned first guide walls 55 and 56 are cut out at the intermediate portion in the vertical direction and to the first guide wall 55, one of them, the above-mentioned feeding roller 51 is provided so as to face the carry-out position of the tag label tape 109 with print from the cut-out portion. By the way, the feeding roller 51 has a roller cut-out portion 51A formed by a concentric groove on the top surface thereof. On the other hand, to the other first guide wall 56, the pressure roller 52 is supported by the above-mentioned roller support part 58 of the pressure operation mechanism part 53 so as to face the carry-out position of the tag label tape 109 with print from the cut-out portion.

The loop antenna LC is disposed in the vicinity of the pressure roller 52 such that the pressure roller 52 is situated at the center in the radial direction (inside in the radial direction, and in detail, on the center axis X of a coil to be described later), and the RFID circuit element To provided on the tag label tape 109 with print is accessed (for reading or writing information) by magnetic induction (including a non-contact system performed via electromagnetic induction, magnetic coupling, and electromagnetic field etc.).

Fig. 8 is a perspective view showing an outside appearance of the internal unit 20 in a state in which the label carry-out mechanism 22 has been removed from the structure shown in Fig. 3.

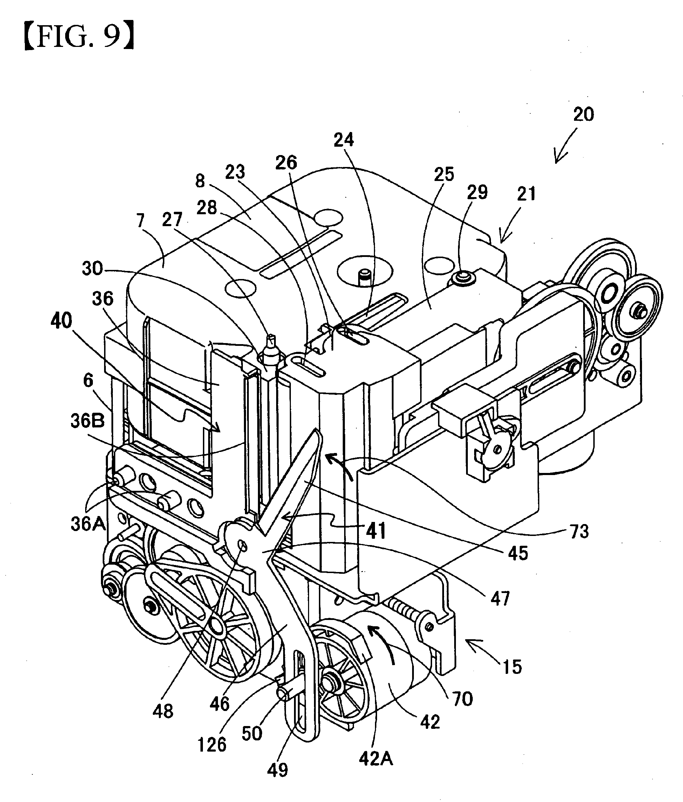

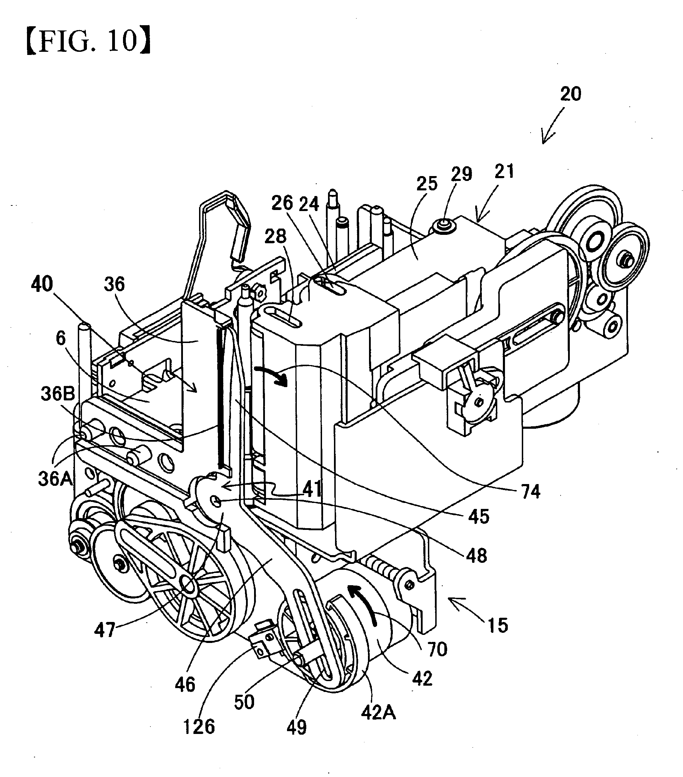

In Fig. 8, the cutter helical gear 42 is provided with a boss 50 formed into a protruding shape, and the boss 50 is configured to be inserted into an elongated hole 49 of the movable blade 41 (refer also to Fig. 9 and Fig. 10 to be described later). In addition, on the down stream side of the fixed blade 40 and the movable blade 41 along the tape carry-out direction, the half-cut unit 35 is mounted so as to be situated between the fixed blade 40 and the movable blade 41, and the first guide walls 55 and 56 (refer to Fig. 4).

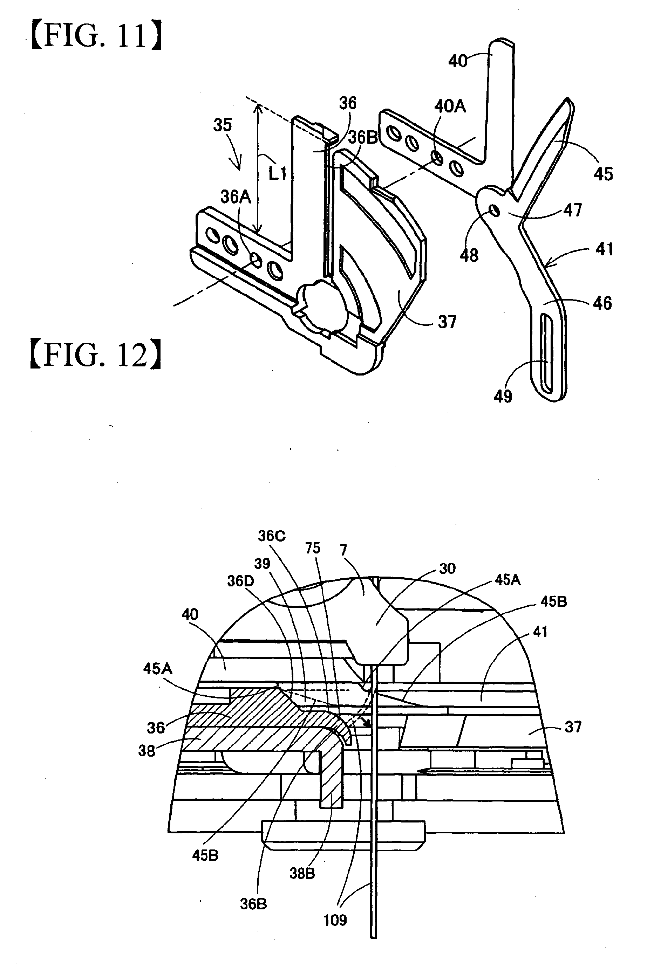

The half-cut unit 35 is composed of a receiving base 38 disposed in accordance with the fixed blade 40, a half-cutter 34 disposed on the side of the movable blade 41, in opposition to the receiving base 38, a first guide part 36 disposed in accordance with the fixed blade 40 between the fixed blade 40 and the receiving base 38, and a second guide part 37 disposed in accordance with the movable blade 41, in opposition to the first guide part 36 (refer also to Fig. 11 to be described later).

The first guide part 36 and the second guide part 37 are configured into a single unit and mounted on a side plate 44 (refer to Fig. 4) together with the fixed blade 40 by a guide fixing part 36A provided at the position corresponding to a fixing hole 40A (refer to Fig. 11 to be described later) of the fixed blade 40.

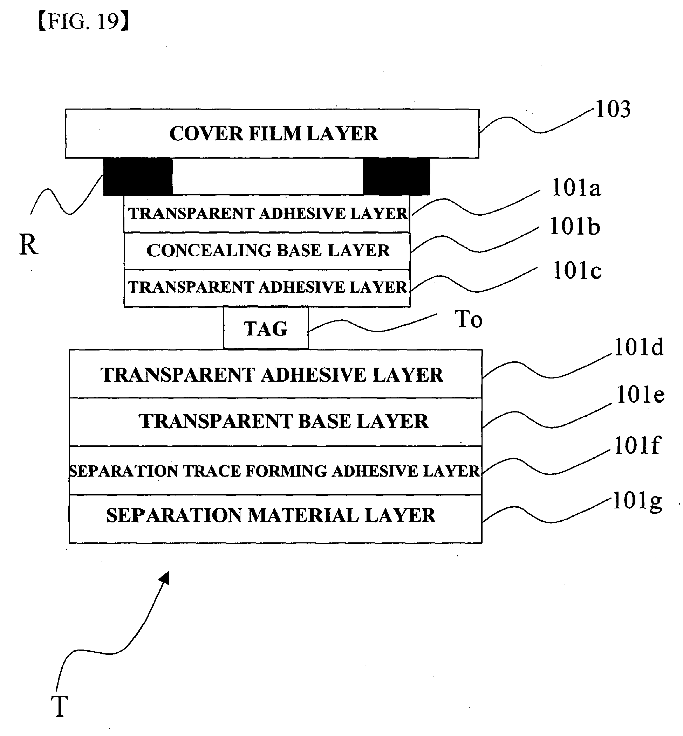

The receiving base 38 is bent such that the end portion facing the tag label tape 109 with print to be carried out from the tape carry-out part 30 is parallel to the tape, forming a receiving surface 38B. Here, as described above, the tag label tape 109 with print has a five-layer structure in which the cover film 103 and the base tape 101 having a seven-layer structure composed of the adhesive layer 101a, the base layer 101b, the adhesive layer 101c, and the separation sheet 101d are bonded to each other (refer also to Fig. 19 to be described later). Then, by pressing the half-cutter 34 against the receiving surface 38B, the tag label tape 109 with print situated between the half-cutter 34 and the receiving surface 38B is cut in such a manner that the cover film 103, the adhesive layer 101a, the base layer 101b, and the adhesive layer 101c are cut, however, only the separation sheet 101d remains in a state of being left uncut. The receiving surface 38B has also a role to guide the tag label tape 109 with print to the label carry-out exit 11 together with the first guide parts 55 and 56.

Fig. 9 and Fig. 10 are perspective views showing an outside appearance of the cutting mechanism 15, in which the half-cutter 34 has been removed from the internal unit 20.

In Fig. 9 and Fig: 10, the cutting mechanism 15 is so designed that, when the cutter helical gear 42 rotates due to the cutter motor 43 (refer to Fig. 3), the movable blade 41 swings with the axial hole 48 as a fulcrum due to the boss 50 and the elongated hole 49, and the tag label tape 109 with print is cut.

In other words, first, when the boss 50 of the cutter helical gear 42 is situated inward (on the left side, in Fig. 9), the movable blade 41 is situated apart from the fixed blade 40 (hereinafter, this state is assumed to be an initial state; refer to Fig. 9). Then, in the initial state, when the cutter motor 43 is driven and the cutter helical gear 42 rotates counterclockwise (in the direction of the arrow 70), the boss 50 moves outwardly and at the same time, the movable blade 41 rotates counterclockwise (in the direction of arrow 73) about the axial hole 48 and cuts the tag label tape 109 with print together with the fixed blade 40 fixed to the internal unit 20 (hereinafter, this state is assumed to be a cut state; refer to Fig. 10) .

After the tag label tape 109 with print is cut and the RFID labels are produced in this manner, it is necessary to return the movable blade 41 to the initial state in order to cut the tag label tape 109 with print to be transported next time. Consequently, the cutter motor 43 is driven again to rotate the cutter helical gear 42 counterclockwise (in the direction of the arrow 70), thereby the boss 50 moves inwardly again and at the same time, the movable blade 41 rotates clockwise (in the direction of arrow 74) and the movable blade 41 is separated from the fixed blade 40 (refer to Fig. 9). Then, the state is brought about in which the tag label tape 109 with print to be printed and transported next time can be cut from the cartridge 7.

At this time, on the cylindrical outer wall of the cutter helical gear 42, a cam 42A for the cutter helical gear is provided and when the cutter helical gear 42 rotates due to the cutter motor 43, a micro switch 126 provided adjacent to the cutter helical gear 42 is switched from the off-state to the on-state by the action of the cam 42A for the cutter helical gear. With the arrangement, the cut state of the tag label tape 109 with print is detected.

Fig. 11 is a perspective view showing a detailed structure of the movable blade 41 and the fixed blade 40 mentioned above together with the above-mentioned half cut unit 35 and Fig. 12 is a partially enlarged section view thereof. In Fig. 11 and Fig. 12, the fixedblade 40 is fixed to the side plate 44 (refer to Fig. 4) provided in an erect position on the left side of the cartridge holder 6 in the printing mechanism 15 with a screw etc., a fixing means, through the fixing hole 40A.

The movable blade 41 has a substantially V-shape and is composed of a blade part 45, a haft part 46 situated in opposition to the blade part 45, and a bent part 47. On the bent part 47, the axial hole 48 is provided and the movable blade 41 is supported by the side plate 44 at the axial hole 48 such that the movable blade 41 can rotate with the bent part 47 as a fulcrum. In addition, in the haft part 46 on the opposite side of the blade part 45 provided at the cutting part of the movable blade 41, the elongated hole 49 is formed. The blade part 45 is formed by a two-step blade and the surface of the blade consists of two inclined surfaces having different inclined angles, that is, a first inclined surface 45A and a second inclined surface 45B, with which the thickness of the blade part 45 is reduced gradually.

On the other hand, an end portion 36B facing the tag label tape 109 with print to be carried out, of the first guide part 36 of the half cut unit 35 described above, protrudes along a receiving surface 38B formed at the end portion of the receiving base 38 and is bent in the carry-out direction of the tag label tape 109 with print. Consequently, the end portion 36B of the first guide part 36 has a smooth curved surface in the carry-out direction of the tag label tape 109 with print at a contact surface 36C against the tag label tape 109 with print to be carried out from the cartridge 7.

By causing the end portion 36B of the first guide part 36 to protrude and by forming the contact surface 36C into a curved surface, the front portion of the tag label tape 109 with print curled at a fixed curvature or more first comes to hit against the contact surface 36C of the first guide part 36. At this time, when the front portion of the tag label tape 109 with print hits against the downstream side (in the downward direction, in Fig. 12) in the carry-out direction of the tag label tape 109 with print from a boundary point 75 on the contact surface 36C of the first guide part, the front portion of the tag label tape 109 with print moves downstream along the curved surface and thus the front portion is guided to the direction of the label carry-out 11 without invading between the fixed blade 40 and the first guide part 36 or between the fixed blade 40 and the receiving base 38.

In addition, the first guide part 36 is formed such that a guide width L1 (refer to Fig. 11) corresponding to the transport path of the tag label tape 109 with print is larger than the maximum width (36 mm in the present embodiment) of the tag label tape 109 with print to be mounted, and an internal surface 36D is formed so as to be continuous with the contact surface 36C. The internal surface 36D is formed facing the first and second inclined surfaces 45A and 45B (details will be described later) of the movable blade 41 and at the time of cutting, part of the first and second inclined surfaces 45A and 45B comes into contact therewith (refer to Fig. 12). Since the blade part of the movable blade 41 is formed by a two-step blade, when the tag label tape 109 with print is cut by the movable blade 41, a gap 39 is formed between the contact surface 36C and the internal surface 36D corresponding to the end portion of the first guide part 36 and the second inclined surface 45B of the movable blade 41 (refer to Fig. 12).

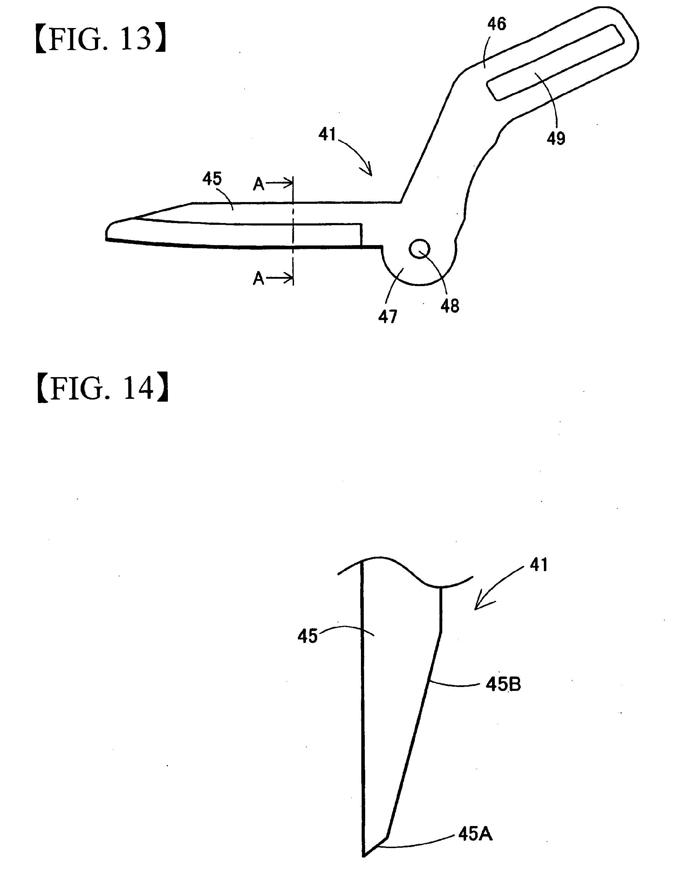

Fig. 13 is an elevation view showing an outside appearance of the movable blade 41 and Fig. 14 is a transverse section view by the A-A section in Fig. 13.

In Fig. 13 and Fig. 14, the angle formed by the first inclined surface 45A and the back surface in opposition to the first inclined surface 45A of the blade part 45 is 50 degrees in the present embodiment.

Fig. 15 is a functional block diagram showing a control system of the tag label producing apparatus 1 of the present embodiment. In Fig. 15, on a control substrate (not shown) of the tag label producing apparatus 1, a control circuit 110 is arranged.

In the control circuit 110, a CPU 111 including a timer 111A internally and controlling each device, an input/output interface 113 connected to the CPU 111 via a data bus 112, a CGROM 114, ROMs 115 and 116, and a RAM 117 are provided.

In the CGROM 114, dot pattern data for displaying each of many characters is stored in correspondence with code data.

In the ROM (dot pattern data memory) 115, dot pattern data for print as to each of many characters for printing characters, such as an alphabet, a symbol, etc., is classified according to the font (Gothic type font, Mincho-tai font, etc.) and for each font, data for print letter size is stored in correspondence with the code data. In addition, graphic pattern data for printing a graphic image including gradation expression is also stored.

In the ROM 116, a print drive control program configured to drive the print head 23, the feeding-roller motor 119, and the feeding-roller motor 65 by reading the data of the print buffer in correspondence with the code data of characters, such as letters, numbers, etc., input from the above-mentioned PC 118, a pulse number determination program configured to determine the number of pulses corresponding to the amount of forming energy of each print dot, a cutting drive control program configured to transport the tag label tape 109 with print to the cutting position by driving the feeding-roller motor 119 when print is completed and to cut the tag label tape 109 with print by driving the cutter motor 43, a tape carry-out program configured to forcedly carry out the cut tag label tape 109 with print (that is, the RFID label T) from the label carry-out exit 11 by driving the feeding-roller motor 65, and various programs necessary for controlling the tag label producing apparatus 1 are stored. The CPU 111 performs various operations based on the various programs stored in the ROM 116.

In the RAM 117, a text memory 117A, a print buffer 117B, a parameter storage area 117E, etc., are provided. In the text memory 117A, document data input from the PC 118 is stored. In the print buffer 117B, dot patterns for printing a plurality of letters, symbols, etc., the number of pulses to be applied, that is, the amount of forming energy of each dot, etc., are stored as dot pattern data, and the print head 23 performs dot print in accordance with the dot pattern data stored in the print buffer 117B. In the parameter storage area 117E, various operation data is stored.

To the input/output interface 113, the print-head drive circuit 120 for driving the PC 118 and the print head 23, a transport motor drive circuit 121 for driving the feeding-roller motor 119, a cutter motor drive circuit 122 for driving the cutter motor 43, a tape carry-out motor drive circuit 123 for driving the feeding-roller motor 65, a transmitting circuit 306 for generating a carrier wave to access (to read/write) the RFID circuit element To via the above-mentioned loop antenna LC and modulating the carrier wave based on the control signal input from the control circuit 110, a receiving circuit 307 for demodulating the response signal received from the RFID circuit element To via the loop antenna LC and outputting it to the control circuit 110, a tape cut sensor 124, and a cut release detection sensor 125 are connected, respectively.

In the control system having the above control circuit 110 as its core, when letter data etc. is input via the PC 118, the text (document data) is stored sequentially in the text memory 117A and at the same time, the print head 23 is driven via the drive circuit 120, and each heating element is selectively driven so as to produce heat in accordance with the print dots corresponding to a single line and print of the dot pattern data stored in the print buffer 117B is performed and in synchronization with this, the feeding-roller motor 119 controls transport of tape via the drive circuit 121. In addition, the transmitting circuit 306 controls modulation of the carrier wave based on the control signal from the control circuit 110 and at the same time, the receiving circuit 307 processes the signal demodulated based on the control signal from the control circuit 110.

In addition, the tape cut sensor 124 and the cut release detection sensor 125 are composed of the cam 42A for the cutter helical gear and the micro switch 126 provided on the cylindrical outer wall of the cutter helical gear 42 (refer to Fig. 9 and Fig. 10). Specifically, when the cutter helical gear 42 rotates due to the cutter motor 43, the micro switch 126 switches from the off-state to the on-state by the action of the cam 42A for the cutter helical gear and that the cut of the tag label tape 109 with print by the movable blade 45 is completed is detected. With the arrangement, the tape cut sensor 124 is composed. In addition, when the cutter helical gear 42 rotates further, the micro switch 126 switches from the on-state to the off-state by the action of the cam 42A for the cutter helical gear and that the movable blade 45 has returned to the release position is detected. With the arrangement, the cut release detection sensor 125 is composed.

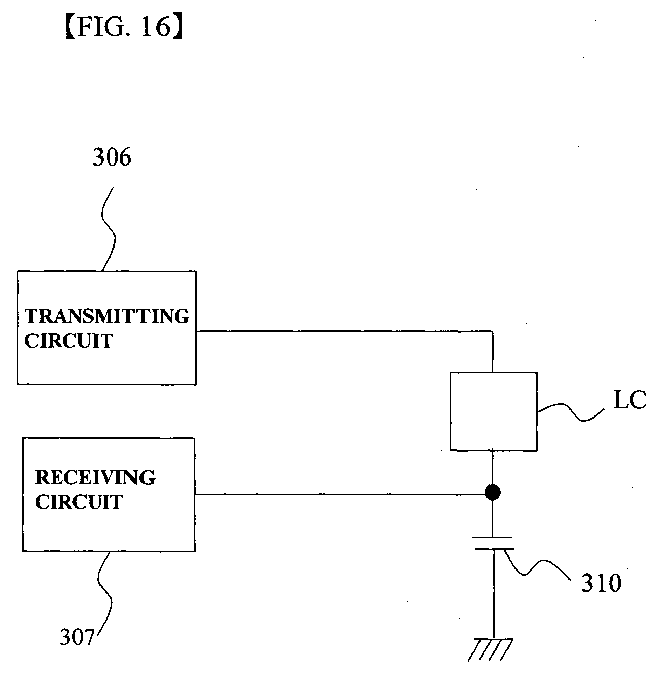

Fig. 16 is a circuit diagram briefly showing a circuit configuration of the connection part of the transmitting circuit 306, the receiving circuit 307, and the loop antenna LC mentioned above. In Fig. 16, the transmitting circuit 306 is connected to the apparatus loop antenna LC and the receiving circuit 307 is connected to a capacitor 310 connected in series with the apparatus loop antenna LC.

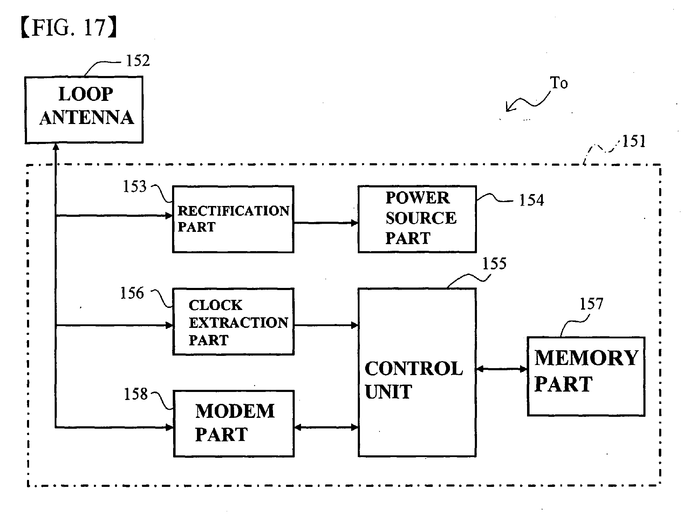

Fig. 17 is a functional block diagram showing a functional configuration of the RFID circuit element To. In Fig. 17, the RFID circuit element To has the loop antenna 152 that transmits and receives a signal contactlessly by magnetic induction with the loop antenna LC on the side of the tag label producing apparatus 1 and the IC circuit part 151 connected to the loop antennal 152.

The IC circuit part 151 includes a rectification part 153 configured to rectify the carrier wave received by the loop antenna 152, a power source part 154 configured to accumulate the energy of the carrier wave rectified by the rectification part 153 to use it for a drive power source, a clock extraction part 156 configured to extract a clock signal from the carrier wave received by the loop antenna 152 and supply it to a control part 155, a memory part 157 capable of storing a predetermined information signal, a modem part 158 connected to the loop antenna 152, and the above-mentioned control part 155 configured to control the operation of the RFID circuit element To via the rectification part 153, the clock extraction part 156, the modem part 158, etc.

The modem part 158 modulates and reflects the carrier wave received by the loop antenna 152 based on the response signal from the control part 155 as well as demodulating the communication signal from the loop antenna LC of the tag label producing apparatus 1 received by the loop antenna 152.

The control part 155 interprets the received signal demodulated by the modem part 158, generates a reply signal based on the information signal stored in the memory part 157, and performs a basic control, such as a control to reply by the modem part 158 etc.

Fig. 18 is a diagram showing an example of an outside, appearance of the RFID label T formed after writing (or reading) of information of the RFID circuit element To by the tag label producing apparatus 1 having the arrangement as described above and cutting of the tag label tape 109 with print are completed, and Fig. 19 is a schematic transverse section view thereof.

In Fig. 18 and Fig. 19, the RFID label T has an eight-layer structure in which the cover film 103 is added to the seven-layer structure shown in Fig. 5 described above, and is composed of the cover film 103, the transparent adhesive layer 101a, the concealing base layer 101b, the transparent adhesive layer 101c, sandwiching the portion of the antenna base including the RFID circuit element To, the transparent adhesive layer 101d, the transparent base layer 101e, the separation trace forming adhesive layer 101f, and the separation sheet 101g from the side of the cover film 103 (the upper side in Fig. 19) toward the opposite side (the lower side in Fig. 19). In addition, as described above, the RFID circuit element To including the loop antenna 152 provided on the back side of the base layer 101b is provided in the adhesive layer 101c, and the print R (the letter "A" indicative of the kind of the RFID label T in this example) is printed to the back surface of the cover film 103.

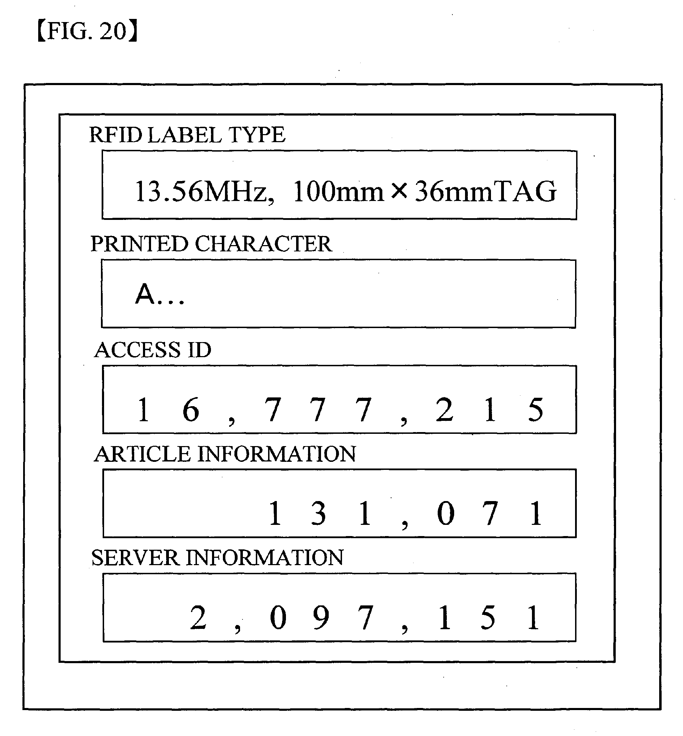

Fig. 20 is a diagram showing an example of a screen displayed on the PC 118 (the terminal 118a or the general-purpose computer 118b) when accessing (reading or writing) the RFID tag information of the IC circuit part 151 of the RFID circuit element To by the tag label producing apparatus 1 as described above.

In Fig. 20, in this example, the type of the RFID label (access frequency and tape dimensions), the printed letter R printed in accordance with the RFID circuit element To, the access (read or write) ID, which is identification information (tag ID) unique to the RFID circuit element To, the address of the article information stored in the information server IS, the address of storage destination of the corresponding information in the route server RS, etc., can be displayed on the PC 118. Then, by the operation of the PC 118, the tag label producing apparatus 1 is activated and the print letter R is printed to the cover film 103 and at the same time, the information, such as the write ID, the commodity information, etc., is written to the IC circuit part 151 (or the information, such as the read ID, the commodity information, etc., stored in advance in the IC circuit part 151, is read).

By the way, when reading or writing, the relationship of correspondence between the tag ID of the RFID circuit element To of the produced RFID label T and the information (or the information written to the IC circuit part 151) read from the IC circuit part 151 of the RFID label T is stored in the above-described route server RS and can be referred to when necessary.

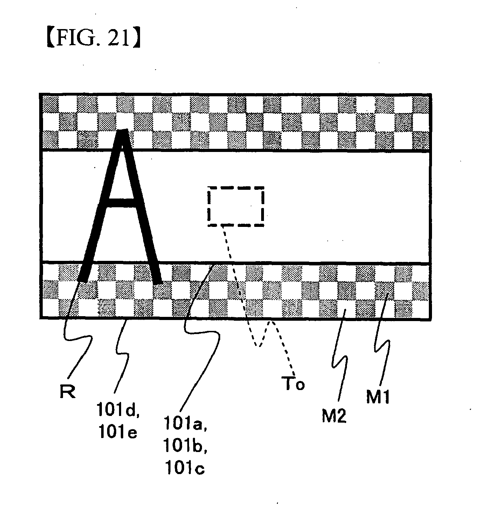

In the above, the essential part of the present embodiment lies in the separation trace forming function using the separation trace forming adhesive layer 101f provided to the RFID label T. This function will be described using Fig. 21.

Fig. 21 is a top view showing an example of a state in which the RFID label T is separated after affixed once to the adhesion target (the object of affixation). In this case, a fixation area M1 in which an adhesive the adhesion of which to the transparent base layer 101e has been reduced, while the adhesion of which to the object of affixation has been increased is arranged, and a departure area M2 in which an adhesive the adhesion of which to the transparent base layer 101e has been increased, while the adhesion of which to the object of affixation has been reduced is arranged, are formed by mixing them in a separation trace forming adhesive layer 207 in, for example, a mosaic-like arrangement pattern. With such a configuration, when the RFID label T is separated from the object of affixation, the adhesive in the fixation M1 remains on the side of the object of affixation and on the other hand, the adhesive in the departure area M2 is separated from the object of affixation and remains on the side of the RFID label T, and thus it is possible to cause a mosaic-like pattern as shown schematically to appear.

Here, the RFID label T in the present embodiment has the concealing base layer 101b to cause (to improve the fine view of the outside appearance of the label) the RFID circuit element To to be not seen from the side of the cover film 103 due to the lamination structure in the order described above. Because of this, it is necessary to make the concealment of the RFID circuit element To by the concealing base layer 101b consistent with the recognizability of the separation trace, which is caused to appear as described above, from the side of the cover film 103 (the side of the label surface). In the present embodiment, however, by making the dimension in the width direction of the base layer 101b smaller than the adhesive layer 101d, the base layer 101e, the adhesive layer 101f, and the separation material layer 101g, as described above, a predetermined width is brought into a non-shielded state on both sides in the width direction of the RFID label T and the separation trace can be recognized visually through the non-shielded portion. As a result, as shown in Fig. 21, it is possible to cause the mosaic-like pattern due to the separation trace forming adhesive layer 101f to appear in a band shape on each of the right and left sides of the RFID label T as a separation trace.

If the RFID label T is separated once, the separation trace remains even if the RFID label T is affixed again, and therefore, it is possible to recognize visually and plainly that the RFID label T has been separated. The plainness becomes more obvious when there is a print-receiving tape layer because the print R becomes more unreadable due to the separation trace. In this manner, due to the fact that the label was once separated becomes visually plain by the separation trace, it becomes practically impossible to separate the RFID label T affixed once to the object of affixation and when the RFID label T is affixed again after separation, it is possible to instantly take such a measure to discard the RFID label immediately and affix a new RFID label again, and therefore, it is possible to improve the security as to the RFID label T.

In addition, in the present embodiment, as shown in Fig. 21, because of the aspect of the outside appearance different from the state of only the original print when viewed from the label surface, it is possible to make it clear visually without fail that separation has been performed and, in particular, the portion of the print R and the separation trace overlap partially each other when viewed from the side of the label surface. With the arrangement, the print R becomes more unreadable and therefore the effect that the visual effect is further improved is obtained.

In addition, by providing the base layer 101e for disposing the separation trace forming adhesive layer 101c, it is possible to dispose the separation trace forming adhesive layer 101c stably in the lamination structure and further, by making the color transparent, it is possible to ensure the recognizability of the separation trace.

By the way, the present invention is not limited to the above-mentioned embodiment and there can be various modifications within the scope not departing from its gist and technical concept. Such modification examples will be described in order below.

### (1) When only the periphery of tag is concealed (shielded)

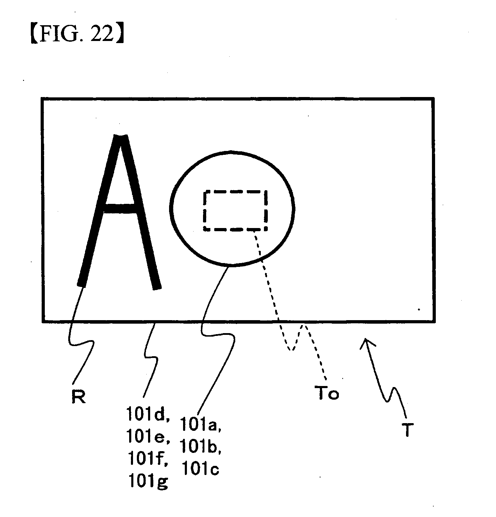

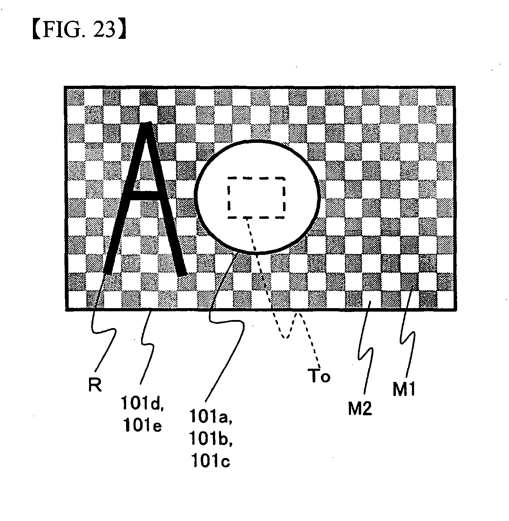

Fig. 22 is a top view showing an example of an outside appearance of the RFID label T according to the present modification example and Fig. 23 is a top view showing an example of the state in which the RFID label T is separated after affixed once to an adhesion target, corresponding to Fig. 18 and Fig. 21 respectively in the above-mentioned embodiment. The same parts as those in the above-mentioned embodiment are assigned the same symbols and their description is omitted or abbreviated appropriately.

As shown in Fig. 22 and Fig. 23, in the present modification example, in the lamination structure described above in the above-mentioned embodiment, the transparent adhesive layer 101a, the concealing adhesive layer 101b, and the transparent adhesive layer 101c are formed into a substantially circular shape so as to shield only the RFID circuit element To and its vicinity. With such a configuration, if the RFID label T is separated once, as shown schematically, the mosaic-like pattern is caused to appear as a separation trace over the almost entire surface except the circular area in the vicinity of the RFID circuit element To.

By the way, at this time, such variations as described below can be thought as for the combination of laminated layers, in particular, the combination of the layers above the antenna base (on the side of the cover film 103) including the RFID circuit element To.
(a) : One of the transparent adhesive layer 101a and the transparent adhesive layer 101d and the concealing base layer 101b are omitted, and an opaque adhesive layer (for example, a white adhesive layer) is provided in place of the transparent adhesive layer 101a or the transparent adhesive layer 101c, and the opaque adhesive layer is caused to have the shielding function of the RFID circuit element To.
(b): In place of either the transparent adhesive layer 101a or the transparent adhesive layer 101c, an opaque adhesive layer is provided and the opaque adhesive layer is caused to have the shielding function of the RFID circuit element To, and in place of the concealing base layer 101b, a transparent base layer similar to the transparent base layer 101e is provided.
(c): In the configuration of (b), either the transparent adhesive layer 101a or the transparent adhesive layer 101c is omitted.
(d) : The transparent adhesive layer 101c is omitted.

It is possible to obtain the same effect as that in the above-mentioned embodiment also in the present modification example.

### (2) When tag is not concealed

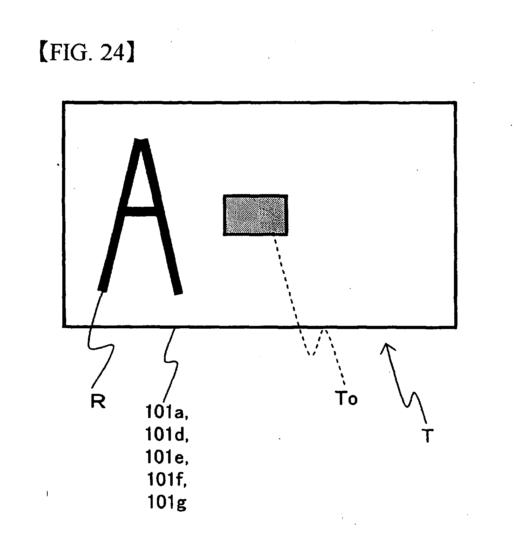

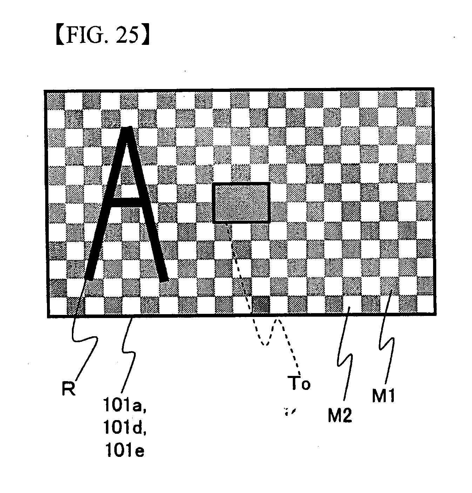

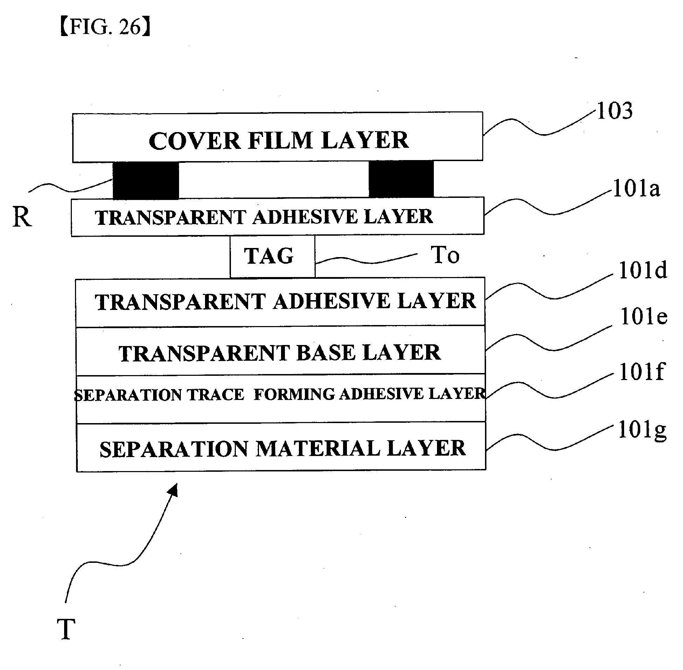

Fig. 24 is a top view showing an example of an outside appearance of the RFID label T according to the present modification example and Fig. 25 is a top view showing an example of the state in which the RFID label T is separated after affixed once to an adhesion target, corresponding to Fig. 18 and Fig. 21 respectively in the above-mentioned embodiment. In addition, Fig. 26 is a schematic transverse section view of the structure shown in Fig. 24, corresponding to Fig. 19 in the above-mentioned embodiment. The same parts as those in the above-mentioned embodiment are assigned the same symbols and their description is omitted or abbreviated appropriately.

As shown in Fig. 24, Fig. 25, and Fig. 26, the present modification example is a structure in which the concealing base layer 101b and the transparent adhesive layer 101c in the lamination structure in the above-mentioned embodiment are omitted and the antenna base including the RFID circuit element To is caused to be positively recognized visually from the side of the label surface. In other words, from the upper side of the label, the cover film layer 103, the transparent adhesive layer 101a, sandwiching the antenna base in between, the transparent adhesive layer 101d, the transparent base layer 101e, the separation trace forming adhesive layer 101f, and the separation material layer 101g are laminated in this order.

In this case, as shown in Fig. 25, after the RFID label T is separated, the mosaic-like pattern appears on the entire surface of the RFID label T. Such a separation trace makes it visually plain that the RFID label T has been separated and the improvement of the security of the RFID label T With the arrangement brings about the same effect as that in the above-mentioned embodiment.

By the way, in the present modification example also, such variations as described below can be thought as for the combination of laminated layers, in particular, the combination of the layers above the antenna base (on the side of the cover film 30) including the RFID circuit element To.
(a): A transparent base layer similar to the transparent base layer 101e is provided below the transparent adhesive layer 101a.
(b) : A configuration in which a transparent adhesive layer similar to the transparent adhesive layer 101a is further provided below the transparent base layer 101e in the configuration of (a). In this case, the transparent adhesive layer 101d may be omitted.

### (3) When tag is separated and then disposed below separation trace forming adhesive layer

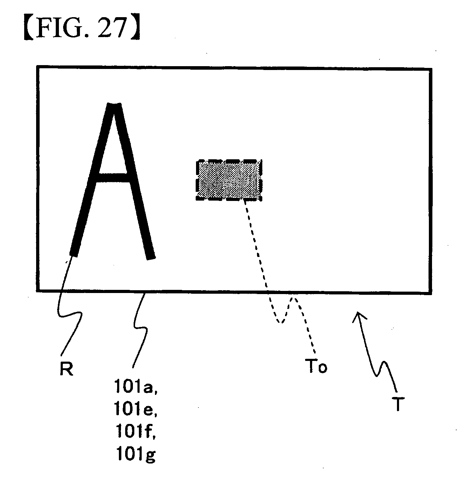

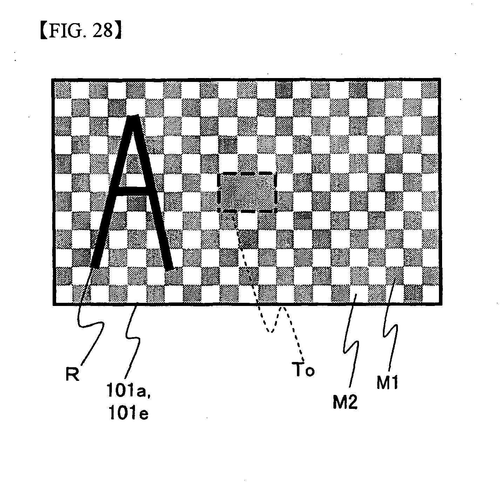

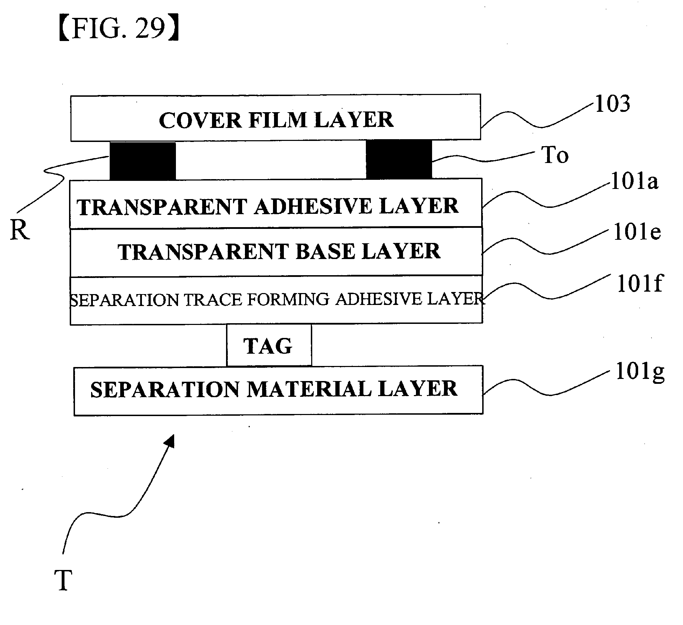

Fig. 27 is a top view showing an example of an outside appearance of the RFID label T according to the present modification example and Fig. 28 is a top view showing an example of the state in which the RFID label T is separated after affixed once to an adhesion target, corresponding to Fig. 18 and Fig. 21 respectively in the above-mentioned embodiment. In addition, Fig. 29 is a schematic transverse section view of the structure shown in Fig. 27, corresponding to Fig. 19 in the above-mentioned embodiment. The same parts as those in the above-mentioned embodiment are assigned the same symbols and their description is omitted or abbreviated appropriately.

As shown in Fig. 27, Fig. 28, and Fig. 29, the present modification example is a structure in which the antenna base including the RFID circuit element To is provided below the separation trace forming adhesive layer 101f (on the side of object of affixation) in order to reduce the number of adhesive layers as much as possible. In other words, from the upper side of the label, the cover film layer 103, the transparent adhesive layer 101a, the transparent base layer 101e, the separation trace forming adhesive layer 101 f, and the antenna base being sandwiched in between, the separation material layer 101g are laminated in this order.

In this case, as shown in Fig. 28, after the RFID label T is separated, the mosaic-like pattern appears on the entire surface of the RFID label T. That such a separation trace makes it visually plain that the RFID label T has been separated and thereby improves the security of the RFID label T is the same as that in the above-mentioned embodiment. In particular, since the print part and the separation trace overlap each other without fail when viewed from the side of the label surface, the print becomes more unreadable and the effect that the visual effect is improved is obtained.

In addition, a structure is such that the whole of the RFID label T is affixed to the object of affixation using the area other than the portion of the antennal base including the RFID circuit element To of the separation trace forming adhesive layer 101f and the adhesive layer on the side of the separation material layer 101g from the antenna base is omitted and thereby there is also an effect that the dimension in the thickness direction of the whole of the RFID label T can be reduced.

### (4) When affixation is not performed

In other words, this is a case where application is made to a cartridge for a tag label producing apparatus that makes print directly to a cover film provided to a tag tape, not the lamination method as described in the above-mentioned embodiment and each modification example, in which print is made to the cover film 103 different from the base tape 101 provided with the RFID circuit element To and they are bonded to each other.

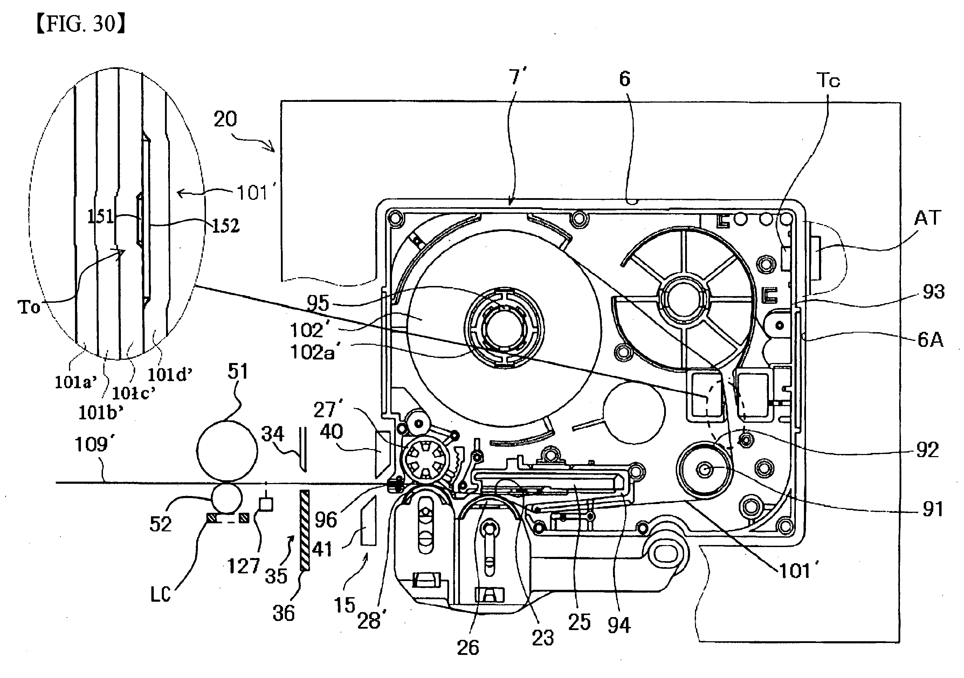

Fig. 30 is a plan view showing a detailed structure of a cartridge 7' of non-laminate type according to the present modification example, corresponding to Fig. 5 described above. The same parts as those in Fig. 5 etc. are assigned with the same symbols and their description is omitted appropriately.

In Fig. 30, the cartridge 7' has a first roll 102' wound by a heat sensitive tape 101' and a feeding roller 27' configured to feed the heat sensitive tape 101' in the direction toward the outside of the cartridge 7'.

The first roll 102' winds the band-like transparent heat sensitive tape 101' on which the plurality of the RFID circuit elements To are formed sequentially in the lengthwise direction around a reel member 102a' . The reel member 102a' is inserted and accommodated rotatably in a boss 95 erected on the bottom surface of the cartridge 7'.

The heat sensitive tape 101' (excluding the portion of the antenna base provided with the RFID circuit element To) wound around the first roll 102' has a four-layer structure (refer to the partially enlarged diagram in Fig. 30) in this example, and is configured by laminating a thermal layer (heat sensitive cover film) 101a' composed of PET (polyethylene terephthalate) or the like having a heat sensitive recording layer and including a translucent (transparent) color, a base layer 101b' composed of PET (polyethylene terephthalate) or the like and including a translucent (transparent) color, a separation trace forming adhesive layer 101c' composed of appropriate adhesive material, and a separation material layer 101d' with the antenna base portion being sandwiched in between in this order from the side to be wound inwardly (the left side in Fig. 30) toward the opposite side (the right side in Fig. 30).

To the back side of the base layer 101b', the separation material layer 101d' is bonded via the separation trace forming adhesive layer 101c' and between the adhesive layer 101c' and the separation material layer 101d', the loop antenna 152 formed into a loop coil shape and which performs transmission and reception of information and the antenna base including the RFID circuit element To (abbreviated simply to "tag To" in each figure) composed of the IC circuit part 151 are provided.

When the cartridge 7' is mounted to the cartridge holder 6 and the roller holder 25 is moved from the separation position to the contact position, the heat sensitive tape 101' is sandwiched between the feeding roller 27' and a sub roller 28' as well as between the print head 23 and the platen roller 26. Then, the feeding roller 27', the sub roller 28', and the platen roller 26 rotate in synchronization with one another and the heat sensitive tape 101' is fed out from the first roll 102'.

The fed-out heat sensitive tape 101' is supplied to the print head 23 on the downstream side in the transport direction from an opening 94 while being guided by a substantially cylindrical reel 92 inserted rotatably into a reel boss 91 erected on the cartridge bottom surface. The plurality of the heating elements of the print head 23 are energized by the print-head drive circuit 120 (refer to Fig. 15) and With the arrangement, the thermal layer 101a' of the heat sensitive tape 101' alters and the label print R is formed and after formed as a tag lave tape 109' with print, it is carried out from a carry-out exit 96 to the outside of the cartridge 7'.

After it is carried out to the outside of the cartridge 7', the access (information read/write) of the IC circuit part 151 via the above-described loop antenna LC is performed. After that, as to the transport by the feeding roller 51, the cut by the cutting mechanism 15, etc., it is sufficient to perform in the same manner as that in the above-mentioned embodiment and therefore their description is omitted.

By the way, the half cut unit 35 is different from that corresponding to the laminate type described in Fig. 10 etc. In other words, in the configuration described in Fig. 10 etc., the receiving base 36 is situated on the side of the print head 23 and the half cutter 34 is on the side of the platen roller 26. This is a configuration for making a half cut in the surface on the opposite side of the separation material layer of the produced tape. However, when the heat sensitive tape is used as in the present example (the type in which the ink ribbon is used without lamination also applies to this case), the separation material layer is on the opposite side of the lamination type. Consequently, the arrangement of the receiving base 36 and the half cutter 34 is opposite in order to make a half cut in the portion other than the separation material layer. In other words, the half cutter 34 is situated on the side of the print head 23 and the receiving base 36 is on the side of the platen roller 26.

In addition, in the above example, in order to make it possible to automatically detect the information about the cartridge type etc. about the cartridge 7' on the apparatus side, an RFID circuit element for cartridge Tc that stores information about the cartridge 7' in advance is arranged on an outer circumferential sidewall surface 93 of the cartridge 7. In addition, on a sidewall portion 6A facing the RFID circuit element Tc of the cartridge holder 6, an antenna AT is provided, which transmits and receives signals through non-contact wireless communication with the RFID circuit element Tc.

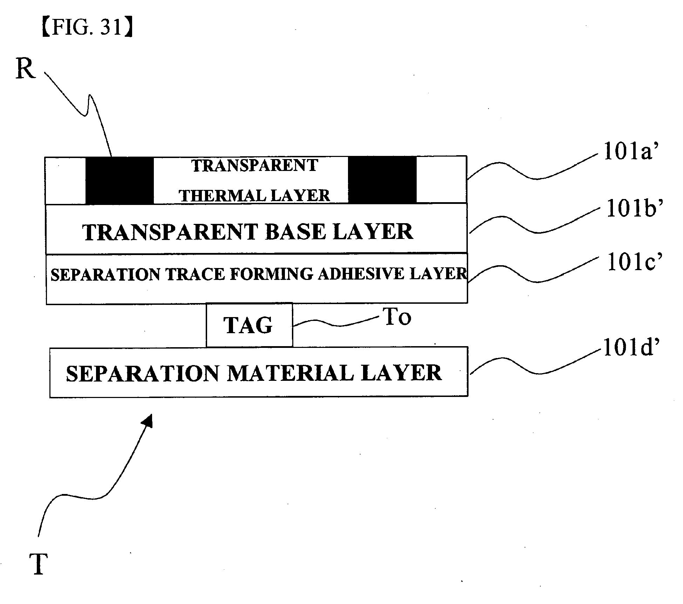

Fig. 31 is a schematic transverse section view of the RFID label T formed when the information write (or read) of the RFID circuit element To and the cut of the tag lave tape 109' with print are completed by the tag label producing apparatus 1 with the above-described configuration, corresponding to Fig. 19 etc. in the above-mentioned embodiment.

In Fig. 31, the RFID label T has a four-layer structure (excluding the portion of the antenna base), as described above, in which the thermal layer 101a', the base layer 101b', the separation trace forming adhesive layer 101c', and the separation material layer 101d' are laminated. Then, as described above, the RFID circuit element To including the loop antenna 152 is provided on the side of the separation material layer 101d' of the separation trace forming adhesive layer 101c', and the print R is formed on the transparent thermal layer 101a'. By the way, in this case, the thermal layer 101a' and the base layer 101b' are provided on the end portion on the other side in the direction of label width, constituting the print-receiving tape layer to which a predetermined printing is made. In addition, it may also be possible to use publicly known heat sensitive paper in place of them and to form a print in the heat sensitive paper with the heat produced by the print head 23.

As in the modification example in (3) mentioned above, the RFID label T in the present modification example causes the separation trace forming adhesive layer 101c' to conceal the RFID circuit element To, and therefore, as in the behavior described in Fig. 27 and Fig. 28 described above, the mosaic-like pattern, which is a separation trace, appears on the entire surface of the RFID label T. Then, the separation trace makes it visually plain that the RFID label has been separated and thereby the security of the RFID label T is improved as in the case of the above-mentioned embodiment.

In addition, since the print portion and the separation trace overlap each other without fail when viewed from the side of label surface, the effect that the print is hard to read and the visual effect is improved, and the effect that the dimension of the entire RFID label T in the direction of thickness can be reduced in the structure in which the entire RFID label T is affixed to the adhesion target using the area other than the portion of the antenna base including the RFID circuit element To of the trace forming adhesive layer 101f are the same.

### (5) When print is made by providing image receiving layer on the normal base layer

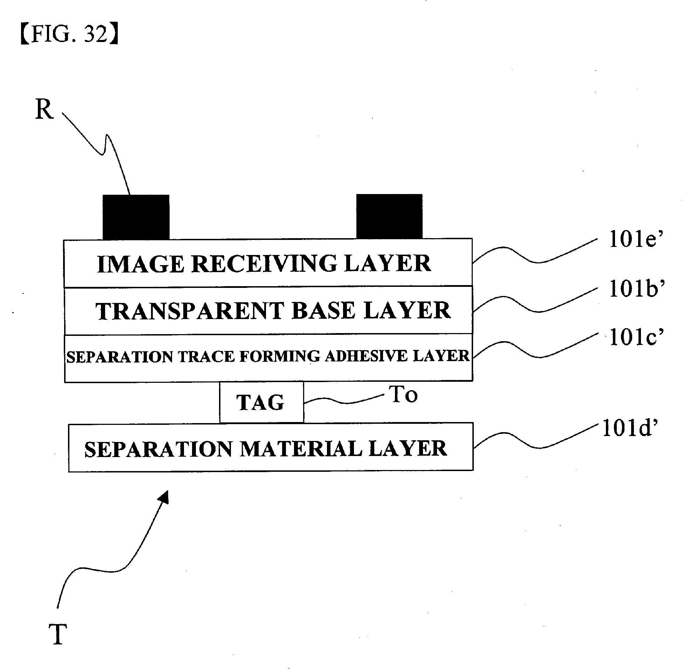

Fig. 32 is a schematic transverse section view of the RFID label according to the modification example, corresponding to Fig. 32 of the modification example in (4) mentioned above. The same parts as those in the modification example in (4) mentioned above, the embodiment, etc., are assigned the same symbols and their description is omitted or abbreviated appropriately.

In Fig. 32, in this modification example, an image receiving layer 101e' for making print with ink is provided, in place of the transparent thermal layer 101a', on the upper side of the transparent base layer 101b' (on the opposite side of the separation material layer 101d') in the lamination structure shown in Fig. 31. In this case, in the configuration shown in Fig. 30 described above, the ink ribbon similar to that in Fig. 5 is added and the letter R is printed to the surface of the image receiving layer 101e' (the surface on the opposite side of the separation material layer 101d') when the plurality of the heating elements of the print head 23 are energized, and after formed as the tag lave tape 109' with print, it is carried out from the carry-out exit 96 to the outside of the cartridge 7'.

In Fig. 32, the RFID label T has a four-layer structure as in the above description (excluding the portion of the antenna base), in which the image receiving layer 101e', the base layer 101b' , the separation trace forming adhesive layer 101c', and the separation material layer 101d' are laminated. Then, as described above, the RFID circuit element To including the loop antenna 152 is provided on the side of the separation material layer 101d' of the separation trace forming adhesive layer 101c', and the print R is printed to the surface of the image receiving layer 101e' (the surface on the opposite side of the separation material layer 101d'). By the way, in this case, the image receiving layer 101e' and base layer 101b' constitute the print-receiving tape layer described in each claim, provided on the end portion on the other side in the direction of label thickness, and to which a predetermined printing is printed.

The same effect as that in the modification example in the above-mentioned (4) is obtained also in the RFID label T in the present modification example.

### (6) When tag is disposed on the upper side than separation trace forming adhesive layer

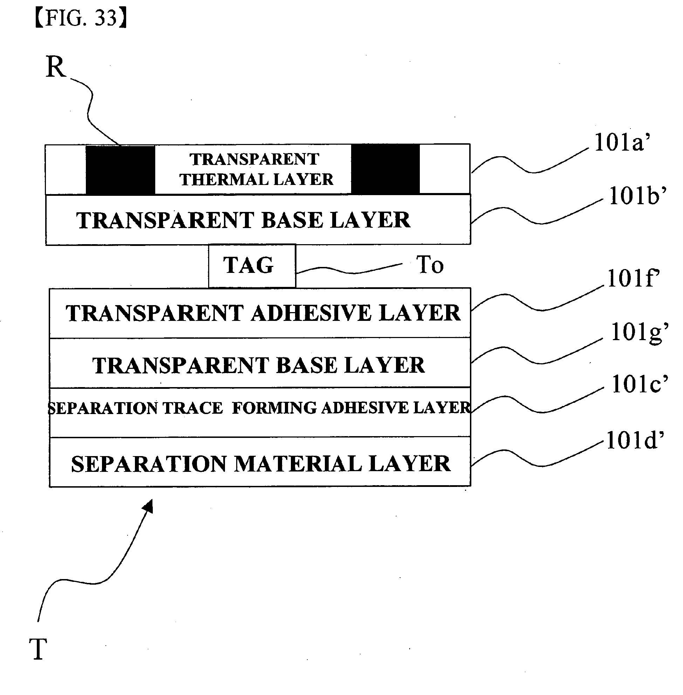

Fig. 33 is a schematic transverse section view of the RFID label T according to this modification example, corresponding to Fig. 31 of the modification example in the above-mentioned (4). The same parts as those in the above-mentioned modification example (4) are assigned the same symbols and their description is omitted or abbreviated appropriately.

As shown in Fig. 33, the present modification example has a configuration in which the antenna base including the RFID circuit element To is provided on the upper side than the separation trace forming adhesive layer 101f (on the opposite side of the adhesion target) as in the above-described embodiment. In other words, in the order from the upper side of the label, the transparent thermal layer 101a' and the transparent base layer 101b' are provided and the antenna base being sandwiched in between, a transparent adhesive layer 101f' and a transparent base layer 101g' are newly provided, and further, the separation trace forming adhesive layer 101c' and the separation material layer 101d' are laminated for each layer in this order.

In this case also, after the RFID label T is separated, the mosaic-like pattern (excluding the portion of the RFID label T) appears on the entire surface, and thereby, the separation trace makes it visually plain that the RFID label T has been separated and With the arrangement, the security of the RFID label T is improved as in the case of the above-mentioned embodiment.

In addition, as in the above-described embodiment, it is possible to stably dispose the trace forming adhesive layer 101c' in the lamination structure by providing the base layer 101g' for disposing the separation trace forming adhesive layer 101c' and it is possible to ensure the recognizability of the separation trace by making the color transparent.

### (7) When printing by providing image receiving layer on normal base layer

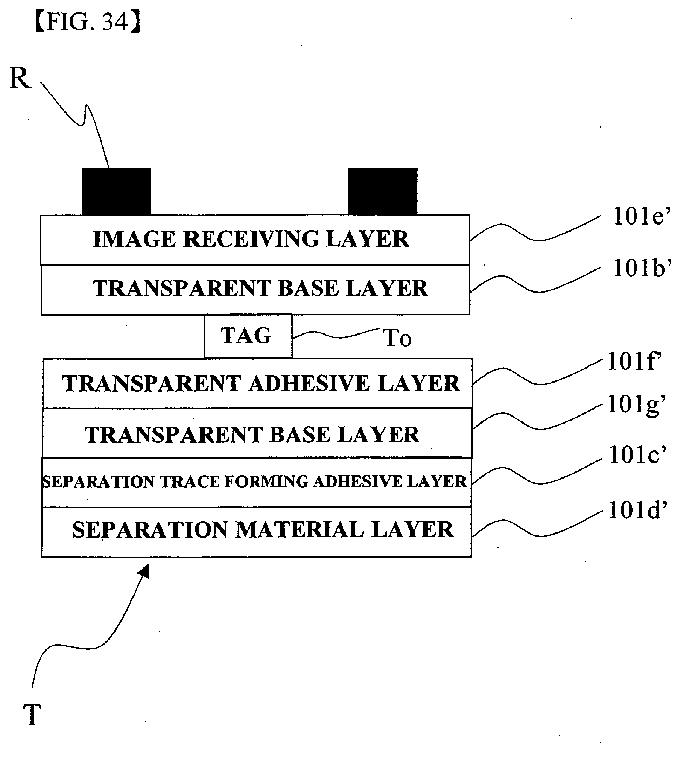

Fig. 34 is a schematic transverse section view of the RFID label according to this modification example, corresponding to Fig. 33 of the modification example in the above-mentioned (6). The same parts as those in the modification examples etc. in the above-mentioned (6) and (4) are assigned the same symbols and their description is omitted or abbreviated appropriately.

In Fig. 34, in this modification example, as in the modification example in the above-described (4), the image receiving layer 101e' configured to print with ink is provided, in place of the transparent thermal layer 101a', on the upper side of the transparent base layer 101b' (on the opposite side of the separation material layer 101d') in the lamination structure shown in Fig. 33 in the modification example in the above-mentioned (6) . In this case, as in the modification example in (4), the print R is printed in the configuration in which the ink ribbon is added in Fig. 30 described above. As a result, the RFID label T is laminated by the image receiving layer 101e', the base layer 101b', and the antenna base being sandwiched in between, the transparent adhesive layer 101f', the transparent base layer 101g', the separation trace forming adhesive layer 101c', and the separation material layer 101d'. Then, as described above, the print R is printed to the surface of the image receiving layer 101e' (the surface on the opposite side of the separation material layer 101d'). By the way, in this case, the image receiving layer 101e' and the base layer 101b' constitute the print-receiving tape layer described in each claim, provided on the end portion on the other side in the direction of label thickness, and to which a predetermined printing has been printed.

The same effect as that in the modification example in the above-mentioned (6) is obtained also in the RFID label T in the present modification example.

### (8) Others

For example, in the above, an example is shown in which write/read or print of the RFID tag information is performed to the tapes 101 and 101' while moving, however, this is not limited and an embodiment is possible in which the tapes 101 and 101' etc. are made to come to a stop at a predetermined position (further, as to read/write, a state may also be possible in which they are held by a predetermined transport guide), and the above-mentioned print and read/write are performed.

In addition, in the above, an example is described in which the tag label tapes 109, 109' with print for which print and access (read or write) to the RFID circuit element To have been completed is cut by the cutter and thus the RFID labels T are formed, however, this is not limited. In other words, in the case where a label base separated in advance into a predetermined size corresponding to the label (so-called die-cut label) is disposed continuously on the tape fed out from the roll, an embodiment is possible in which only the label base (provided with the accessed RFID circuit element To and a corresponding print is printed) is separated from the tape after the tape is carried out from the carry-out exit and thus the RFID label T is produced without a cut by the cutter.

In addition, in the above, read or write of RFID tag information is performed by the IC circuit part 151 of the RFID circuit element To and at the same time, a print is printed in order to identify the RFID circuit element To by the print head 23, however, this is not limited, and such printing is not required necessarily and an embodiment is also possible in which only read or write of RFID tag information is performed.

In addition, in the above, an example is described in which the tag tape is wound around the reel member to constitute a roll and the roll is disposed in the cartridges 7 and 7' and the tag tape is fed out, however, this is not limited. For example, it may also be possible to produce a RFID label by stacking a long flat paper-shaped or strip-shaped tape or sheet (including what is formed by cutting into an appropriate length after the tape wound around the roll is fed out) on which at least one RFID circuit element To is disposed in a predetermined storage part (by stacking and laminating into, for example, a shape of tray) to form a cartridge, mounting the cartridge in a cartridge holder on the side of the tag label producing apparatus, moving and transporting from the storage part, and performing print and write.

In addition, there can be thought a configuration in which the roll is attached directly to the side of the tag label producing apparatus detachably or a configuration in which a long flat paper-shaped or strip-shaped tape or sheet is supplied into the tag label producing apparatus one by one from the outside of the tag label producing apparatus by transporting by a predetermined feeder mechanism. Further, not limited to those, such as the cartridges 7 and 7', which can be attached to and detached from the side of the tag label producing apparatus main body, it can be thought to provide the first rolls 102 and 102' as a so-called installation type or an integrated type, which cannot be attached to or detached from the side of the apparatus main body. In this case also, the same effect is obtained.

In addition, besides what is already described above, it may also be possible to combine and utilize the techniques in the above-mentioned embodiments or the respective modification examples appropriately.

Although not exemplified here individually, there can be others and the present invention may be subjected to various modifications and embodied within the scope not departing from the gist thereof.

## Claims

1. An RFID label comprising:
a separation material layer (101g; 101d') provided at the end on one side of the label (T) in the thickness direction and detached from a portion other than that at affixing;
a substantially sheet-state antenna base arranged on the other side from said separation material layer (101g; 101d') in said thickness direction of the label (T) and on which an RFID circuit element (To) having an IC circuit part (151) that stores information and a tag antenna (152) that transmits/receives information is arranged; and
a trace forming adhesive layer (101f; 101c') at least a portion of that is provided adjacent to the other side of said separation material layer (101g; 101d') in said thickness direction of the label (T) and that forms a predetermined separation trace by being detached after affixed to an adhesion target.

2. The RFID label according to Claim 1, **characterized in that**:
said trace forming adhesive layer (101f; 101c') including a fixation area (M1) that remains fixed to said adhesion target at detaching and a departure area (M2) that departs from said adhesion target at detaching is configured to form said predetermined separation trace by the arrangement of said fixation area (M1) and said departure area (M2).

3. The RFID label according to Claim 1 or 2, **characterized in that**:
said RFID label (T) further comprises a print-receiving tape layer (103; 101a , 101b'; 101e', 101b') provided at the end on the other side of the label (T) in said thickness direction and on which a predetermined printing is applied.

4. The RFID label according to Claim 3, **characterized in that**:
said RFID label (T) further comprises an intermediate base layer (101b) disposed at an intermediate portion between said print-receiving tape layer (103) and said antenna base in the label thickness direction,
said trace forming adhesive layer (101f) is provided on one side from said antenna base in said label thickness direction.

5. The RFID label according to Claim 4, **characterized in that**:
said intermediate base layer (101b) with a substantially opaque color is configured to have a smaller width than said trace forming adhesive layer (101f).

6. The RFID label according to Claim 3 or 4, **characterized in that**:
said trace forming adhesive layer (101c') is provided on one side from said antenna base in the label thickness direction; and
said print-receiving tape layer (101a', 101b'; 101e', 101b') has a substantially transparent color.

7. The RFID label according to one of Claims 1 to 6, **characterized in that**:
said RFID label (T) further comprises a print-receiving tape layer (101a', 101b'; 101e', 101b') with a substantially transparent color provided at the end on the other side of the label (T) in said thickness direction and on which a predetermined printing is applied,
said trace forming adhesive layer (101c') is provided on the other side from said antenna base in the label thickness direction.

8. The RFID label according to any one of Claims 1 to 7, **characterized in that**:
said RFID label (T) further comprises a base layer (101e; 101b'; 101g') for arranging adhesive having a substantially translucent color for providing said trace forming adhesive layer (101f; 101c') on one side in the label thickness direction.

9. The RFID label according to any one of Claims 1 to 8, **characterized in that**:
said predetermined printing has been printed to the surface on one side of said print-receiving tape layer (103) in the label thickness direction.

10. The RFID label according to any one of Claims 1 to 8, **characterized in that**:
said predetermined printing has been printed to the surface on the other side of said print-receiving tape layer (101a', 101b'; 101e', 101b') in the label thickness direction.
